# EUROPEAN PATENT APPLICATION

(11) **EP 4 791 061 A1**
(43) Date of publication of application: **12.08.2026**
(21) Application number: 24881636.5
(22) Date of filing: 23.10.2024
(51) Int. Cl.: H04W 16/28

(54) **COMMUNICATION METHOD AND APPARATUS**

(30) Priority: 23.10.2023 CN 202311382005
(71) Applicant: HUAWEI TECHNOLOGIES CO., LTD., Shenzhen 518129 (CN)
(72) Inventor: QIAO, Yunfei, Shenzhen, Guangdong 518129 (CN); WANG, Jun, Shenzhen, Guangdong 518129 (CN); KONG, Chuili, Shenzhen, Guangdong 518129 (CN)
(74) Representative: Maiwald GmbH
(86) International application number: PCT/CN2024/126659
(87) International publication number: WO 2025/087272

(57) **Abstract**

Embodiments of this application provide a communication method and apparatus. **In** the method, a network device may perform beam configuration for a terminal device by sending beam indication information, and the terminal device may determine, through the beam indication information, at least one piece of coverage information of a target beam, for example, a coverage time, a frequency-domain resource, or a geographical coverage area, thereby adjusting a local operation and transmitting a signal based on the coverage information of the target beam. According to the method, the network device does not need to configure the coverage information of the target beam for the terminal device through higher-layer signaling. Instead, the network device quickly performs beam configuration for the terminal device through the beam indication information. Therefore, this manner can improve efficiency of beam configuration for the terminal device and meet a requirement of a high-dynamic beam configuration.

## Description

### CROSS-REFERENCE TO RELATED APPLICATIONS

This application claims priority to Chinese Patent Application No. 202311382005.0, filed with the China National Intellectual Property Administration on October 23, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Compared with a conventional terrestrial network (for example, a 4th generation (The 4th Generation, 4G) mobile communication system or a 5th generation (The 5th Generation, 5G) mobile communication system), a non-terrestrial network (Non-terrestrial network, NTN) has features such as wider coverage, a higher speed, and lower costs. In particular, in places such as oceans, deserts, or airspace where the terrestrial network cannot be directly deployed, the non-terrestrial network can be used as a supplement or an extension of the terrestrial network, to achieve a purpose of wide-area seamless coverage, thereby effectively addressing an issue of Internet access in regions with insufficient communication infrastructure.

As a typical example of the NTN, satellite communication features a long communication distance, a large coverage area, and flexible networking, and plays an irreplaceable role in fields such as space communication, aeronautical communication, military communication, emergency and disaster-relief communication, and high-mobility communication. With satellite communication introduced into a conventional communication system, a base station or some functions of the base station are deployed on a satellite, so that not only seamless coverage can be provided for a terminal device, but also impact of natural disasters can be avoided, and reliability of the communication system can be ensured.

To support wide-area coverage, a network device (for example, a satellite) in the NTN usually requires hundreds or even thousands of beams. To alleviate a contradiction between load and coverage of the network device, a beam hopping technology emerges. In an NTN supporting the beam hopping technology, the network device may be configured with a small quantity of beams (for example, dozens of beams), and the beams serve all coverage areas of the network device in a time division manner. To be specific, the network device switches beams in a time sequence, so that the network device can cover one portion of an area by using a beam in a period of time, and cover another portion of the area by using the beam in another period of time.

In the NTN supporting the beam hopping technology, a rule for scheduling a beam by the network device may be referred to as a beam sweeping pattern (pattern). At present, the network device is usually configured for a terminal device within a coverage area through higher-layer signaling, so that the terminal device can adjust a local operation, thereby reducing unnecessary power consumption.

However, due to complexity and variability of an application scenario, there is a high dynamic requirement for beam scheduling of the network device. For example, due to significant differences in service distribution within the coverage area of the network device, beam scheduling needs to be performed for a specific region. For some sudden interference, the network device needs to adjust a beam for avoidance. For some burst services, the network device needs to schedule a beam to support coverage. For such a scenario, a configuration period of higher-layer signaling is long, and a requirement of a high-dynamic beam configuration cannot be met.

### SUMMARY

This application provides a communication method and apparatus for providing beam configuration for a terminal device, to meet a requirement of a high-dynamic beam configuration.

According to a first aspect, an embodiment of this application provides a communication method. The method may be applied to a terminal device. The terminal device herein may be the terminal device itself, or may be a processor, a module, a chip, a chip system, or the like that is in the terminal device and that implements the method. The method includes the following steps.

The terminal device receives beam indication information from a network device. The beam indication information indicates coverage information of a target beam of the network device, and the coverage information of the target beam includes at least one of the following: a coverage time of the target beam, a frequency-domain resource of the target beam, or a geographical coverage area of the target beam. Then, the terminal device transmits a signal based on the coverage information of the target beam of the network device.

In the method, the network device may perform beam configuration for the terminal device by sending the beam indication information, and the terminal device may determine, through the beam indication information, the at least one piece of coverage information of the target beam, for example, the coverage time, the frequency-domain resource, or the geographical coverage area, thereby adjusting a local operation and transmitting a signal based on the coverage information of the target beam. According to the method, the network device does not need to configure the coverage information of the target beam for the terminal device through higher-layer signaling. Instead, the network device quickly performs beam configuration for the terminal device through the beam indication information. Therefore, this manner can improve efficiency of beam configuration for the terminal device and meet a requirement of a high-dynamic beam configuration.

In a possible design, the terminal device may further receive a synchronization signal block from the network device, and determine a time-frequency resource position of the beam indication information based on a time-frequency resource position of the synchronization signal block and a first offset. The first offset is an offset between the time-frequency resource position of the synchronization signal block and the time-frequency resource position of the beam indication information.

According to this design, there is an association relationship between a time-frequency resource of the beam indication information and a time-frequency resource of the synchronization signal block. In this way, the terminal device may determine the time-frequency resource of the beam indication information based on the time-frequency resource of the synchronization signal block, thereby improving efficiency of receiving the beam indication information.

In a possible design, the first offset is preset; or the first offset is carried in the synchronization signal block or a system message.

In a possible design, the target beam includes at least one of the following: a service beam, a synchronization signal block beam, and a random access channel occasion RO beam.

According to this design, flexibility of a beam type used by the network device to perform high-dynamic beam configuration for the terminal device can be improved.

In a possible design, the beam indication information includes at least one piece of indication information. When the coverage information of the target beam includes the coverage time of the target beam, the at least one piece of indication information includes first indication information, the first indication information indicates a second offset, and the second offset includes an offset between a coverage start time of the target beam and a first reference time. Alternatively, when the coverage information of the target beam includes the frequency-domain resource of the target beam, the at least one piece of indication information includes second indication information, the second indication information indicates a third offset, and the third offset includes an offset between a start position of the frequency-domain resource of the target beam and a start position of a first reference frequency-domain resource. Alternatively, when the coverage information of the target beam includes the geographical coverage area of the target beam, the at least one piece of indication information includes third indication information, and the third indication information indicates the geographical coverage area.

According to this design, the beam indication information may indicate specific content of the coverage information of the target beam by using the at least one piece of indication information.

In a possible design, the first reference time is a time-domain resource start time of the synchronization signal block or a time-domain resource start time of the beam indication information. The first reference frequency-domain resource is a frequency-domain resource of the synchronization signal block or a frequency-domain resource of the beam indication information.

In a possible design, when the coverage information of the target beam includes the coverage time of the target beam, the at least one piece of indication information further includes fourth indication information, and the fourth indication information indicates a coverage duration of the target beam. Alternatively, when the coverage information of the target beam includes the frequency-domain resource of the target beam, the at least one piece of indication information further includes fifth indication information, and the fifth indication information indicates a width of the frequency-domain resource of the target beam.

According to this design, the beam indication information may further indicate the coverage duration of the target beam or the width of the frequency-domain resource of the target beam, to indicate the coverage time or the frequency-domain resource of the target beam more completely and accurately.

In a possible design, the beam indication information further includes an indication of a first terminal device group. The indication of the first terminal device group identifies that the beam indication information is configured for a terminal device in the first terminal device group, and the terminal device belongs to the first terminal device group. Alternatively, the beam indication information further includes an identifier of the terminal device.

According to this design, the network device may further indicate a receiving object of the beam indication information by including the indication of the first terminal device group or the identifier of the terminal device in the beam indication information.

In a possible design, the at least one piece of indication information is at least one indication sequence. Alternatively, the beam indication information is carried in downlink control information DCI, and the at least one piece of indication information is at least one indication field in the DCI.

According to this design, when performing dynamic beam scheduling, the network device may notify the terminal device of the coverage information of the target beam by using the indication sequence or the DCI. The terminal device may quickly determine the coverage information of the target beam through indication sequence detection or DCI detection. The network device can quickly perform beam configuration for the terminal device without configuring the coverage information of the target beam for the terminal device through higher-layer signaling. Therefore, this design can meet a requirement of a high-dynamic beam configuration.

In a possible design, a time-frequency resource position of the DCI is located in a common search space.

In a possible design, an offset between a time-frequency resource position of the common search space and the time-frequency resource position of the synchronization signal block is a fourth offset; or a period of the common search space is the same as a revisit period of a synchronization signal block beam.

In a possible design, the fourth offset is preset; or the fourth offset is carried in the synchronization signal block or the system message.

In a possible design, the DCI is scrambled by using a radio network temporary identifier RNTI of the first terminal device group, and the terminal device belongs to the first terminal device group. Alternatively, the DCI is scrambled by using a cell radio network temporary identifier C-RNTI of the terminal device. Alternatively, the DCI is scrambled by using a common RNTI.

According to this design, the network device may scramble the DCI carrying the beam indication information, so that a specific terminal device can parse the DCI, to perform beam configuration for the specific terminal device.

In a possible design, the DCI further includes a control field, and the control field indicates control information for resource scheduling. For example, a control field in the DCI may indicate control information of a physical downlink shared channel PDSCH.

In a possible design, when a quantity of the at least one indication sequence is greater than one, the at least one indication sequence is mutually orthogonal.

According to this design, a phenomenon that interference occurs when the network device transmits the at least one indication sequence can be reduced.

In a possible design, when the coverage information of the target beam includes the coverage time of the target beam, the terminal device may enter a low-power state before the coverage time of the target beam begins, so that power consumption can be reduced.

According to a second aspect, an embodiment of this application provides a communication method. The method may be applied to a network device. The network device herein may be the network device itself, or may be a processor, a module, a chip, a chip system, or the like that is in the network device and that implements the method. The method includes the following steps.

The network device determines beam indication information. Then, the network device sends the beam indication information. The beam indication information indicates coverage information of a target beam of the network device, and the coverage information of the target beam includes at least one of the following: a coverage time of the target beam, a frequency-domain resource of the target beam, or a geographical coverage area of the target beam.

In a possible design, the network device may further send a synchronization signal block. An offset between a time-frequency resource position of the synchronization signal block and a time-frequency resource position of the beam indication information is a first offset.

In a possible design, the first offset is preset; or the first offset is carried in the synchronization signal block or a system message.

In a possible design, the target beam includes at least one of the following: a service beam, a synchronization signal block beam, and a random access channel occasion RO beam.

In a possible design, the beam indication information includes at least one piece of indication information. When the coverage information of the target beam includes the coverage time of the target beam, the at least one piece of indication information includes first indication information, the first indication information indicates a second offset, and the second offset includes an offset between a coverage start time of the target beam and a first reference time. Alternatively, when the coverage information of the target beam includes the frequency-domain resource of the target beam, the at least one piece of indication information includes second indication information, the second indication information indicates a third offset, and the third offset includes an offset between a start position of the frequency-domain resource of the target beam and a start position of a first reference frequency-domain resource. Alternatively, when the coverage information of the target beam includes the geographical coverage area of the target beam, the at least one piece of indication information includes third indication information, and the third indication information indicates the geographical coverage area.

In a possible design, the first reference time is a time-domain resource start time of the synchronization signal block or a time-domain resource start time of the beam indication information. The first reference frequency-domain resource is a frequency-domain resource of the synchronization signal block or a frequency-domain resource of the beam indication information.

In a possible design, when the coverage information of the target beam includes the coverage time of the target beam, the at least one piece of indication information further includes fourth indication information, and the fourth indication information indicates a coverage duration of the target beam. Alternatively, when the coverage information of the target beam includes the frequency-domain resource of the target beam, the at least one piece of indication information further includes fifth indication information, and the fifth indication information indicates a width of the frequency-domain resource of the target beam.

In a possible design, the beam indication information further includes an indication of a first terminal device group. The indication of the first terminal device group identifies that the beam indication information is configured for a terminal device in the first terminal device group. Alternatively, the beam indication information further includes an identifier of a target terminal device.

In a possible design, the at least one piece of indication information is at least one indication sequence. Alternatively, the beam indication information is carried in downlink control information DCI, and the at least one piece of indication information is at least one indication field in the DCI.

In a possible design, a time-frequency resource position of the DCI is located in a common search space.

In a possible design, an offset between a time-frequency resource position of the common search space and the time-frequency resource position of the synchronization signal block is a fourth offset; or a period of the common search space is the same as a revisit period of a synchronization signal block beam.

In a possible design, the fourth offset is preset; or the fourth offset is carried in the synchronization signal block or the system message.

In a possible design, the DCI is scrambled by using a radio network temporary identifier RNTI of the first terminal device group. Alternatively, the DCI is scrambled by using a cell radio network temporary identifier C-RNTI of the target terminal device. Alternatively, the DCI is scrambled by using a common RNTI.

In a possible design, the DCI further includes a control field, and the control field indicates control information of a physical downlink shared channel PDSCH.

In a possible design, when a quantity of the at least one indication sequence is greater than one, the at least one indication sequence is mutually orthogonal.

For technical effects that can be achieved in the second aspect, refer to the descriptions of the technical effects that can be achieved in the first aspect.

According to a third aspect, an embodiment of this application provides a communication method. The method may be applied to a terminal device. The terminal device herein may be the terminal device itself, or may be a processor, a module, a chip, a chip system, or the like that is in the terminal device and that implements the method. The method includes the following steps.

The terminal device receives first information from a network device. The first information indicates a plurality of candidate beam sweeping patterns of a target beam of the network device. Then, the terminal device receives second information from the network device. The second information indicates a first beam sweeping pattern, and the first beam sweeping pattern is one of the plurality of candidate beam sweeping patterns. Finally, the terminal device transmits a signal based on the first beam sweeping pattern.

In the method, the network device may first configure a plurality of candidate beam sweeping patterns of the target beam for the terminal device by using the first information, and then when a candidate beam sweeping pattern needs to be used, notify, by using the second information, the terminal device to use the candidate beam sweeping pattern. In this way, when a beam sweeping pattern needs to be switched to or needs to be used, the network device quickly and flexibly indicates the terminal device to use the beam sweeping pattern. In addition, the network device does not need to indicate, through higher-layer signaling, the terminal device to use the beam sweeping pattern of the target beam. Instead, the network device quickly performs beam configuration for the terminal device by using the second information. Therefore, this manner can improve efficiency of beam configuration for the terminal device and meet a requirement of a high-dynamic beam configuration.

In a possible design, the terminal device may further receive a synchronization signal block from the network device, and determine a time-frequency resource position of the second information based on a time-frequency resource position of the synchronization signal block and a first offset. The first offset is an offset between the time-frequency resource position of the synchronization signal block and the time-frequency resource position of the second information.

According to this design, there is an association relationship between a time-frequency resource of the second information and a time-frequency resource of a synchronization signal block. In this way, the terminal device may determine the time-frequency resource of the second information based on the time-frequency resource of the synchronization signal block, thereby improving efficiency of receiving the second information.

In a possible design, the first offset is preset; or the first offset is carried in the synchronization signal block or a system message.

In a possible design, the target beam includes at least one of the following: a service beam, a synchronization signal block beam, and a random access channel occasion RO beam.

In a possible design, the second information includes at least one piece of indication information. The at least one piece of indication information includes first indication information. The first indication information includes an index of the first beam sweeping pattern or a pattern indication sequence. The pattern indication sequence indicates a coverage order and/or a coverage time that are/is of the target beam for a plurality of beam positions and that are/is indicated by the first beam sweeping pattern. Alternatively, the first indication information indicates a first search space, and the first search space corresponds to the first beam sweeping pattern.

According to this design, the network device may indicate, by using the index, the pattern indication sequence, or the first search space, the to-be-used first beam sweeping pattern.

In a possible design, the at least one piece of indication information further includes second indication information or third indication information. The second indication information indicates a second offset, and the second offset includes an offset between a start time of a beam sweeping period and a first reference time. The third indication information indicates a validity period of the first beam sweeping pattern, and the validity period is greater than or equal to the beam sweeping period.

According to this design, the second information may further indicate other related content of the first beam sweeping pattern by using other indication information.

In a possible design, the first reference time is a time-domain resource start time of the synchronization signal block or a time-domain resource start time of the second information.

In a possible design, the at least one piece of indication information further includes fourth indication information, and the fourth indication information indicates a duration of the beam sweeping period.

In a possible design, a correspondence between the first search space and the first beam sweeping pattern is preset; or the correspondence between the first search space and the first beam sweeping pattern is carried in the synchronization signal block or the system message.

In a possible design, the first indication information includes an index of the first search space.

In a possible design, the first search space is a common search space or a dedicated search space.

In a possible design, the second information further includes an indication of a first terminal device group. The indication of the first terminal device group identifies that the second information is configured for a terminal device in the first terminal device group, and the terminal device belongs to the first terminal device group. Alternatively, the second information further includes an identifier of the terminal device.

According to this design, the network device may further indicate a receiving object of the second information (that is, a terminal device that needs to use the first beam sweeping pattern) by including the indication of the first terminal device group or the identifier of the terminal device in the second information.

In a possible design, the at least one piece of indication information is at least one indication sequence. Alternatively, the second information is carried in downlink control information DCI, and the at least one piece of indication information is at least one indication field in the DCI.

According to this design, when the network device needs to use the first beam sweeping pattern of the target beam, the network device may notify, by using the indication sequence or the DCI, the terminal device to use the first beam sweeping pattern of the target beam. The terminal device may quickly determine, through indication sequence detection or DCI detection, the to-be-used first beam sweeping pattern of the target beam. The network device can quickly configure a beam sweeping pattern for the terminal device without configuring the to-be-used beam sweeping pattern for the terminal device through higher-layer signaling. Therefore, this manner can meet a requirement of a high-dynamic beam configuration.

In a possible design, the DCI is scrambled by using a radio network temporary identifier RNTI of the first terminal device group, and the terminal device belongs to the first terminal device group. Alternatively, the DCI is scrambled by using a cell radio network temporary identifier C-RNTI of the terminal device. Alternatively, the DCI is scrambled by using a common RNTI.

According to this design, the network device may scramble the DCI carrying the second information, so that a specific terminal device can parse the DCI, to configure a beam sweeping pattern for the specific terminal device.

In a possible design, the DCI further includes a control field, and the control field indicates control information for resource scheduling, for example, control information of a PDSCH.

In a possible design, when a quantity of the at least one indication sequence is greater than one, the at least one indication sequence is mutually orthogonal.

According to this design, a phenomenon that interference occurs when the network device transmits the at least one indication sequence can be reduced.

According to a fourth aspect, an embodiment of this application provides a communication method. The method may be applied to a network device. The network device herein may be the network device itself, or may be a processor, a module, a chip, a chip system, or the like that is in the network device and that implements the method. The method includes the following steps.

The network device sends first information. The first information indicates a plurality of candidate beam sweeping patterns of a target beam of the network device. Then, the network device sends second information. The second information indicates a first beam sweeping pattern, and the first beam sweeping pattern is one of the plurality of candidate beam sweeping patterns. The network device transmits a signal based on the first beam sweeping pattern.

In a possible design, the network device may further send a synchronization signal block. An offset between a time-frequency resource position of the synchronization signal block and a time-frequency resource position of the second information is a first offset.

In a possible design, the first offset is preset; or the first offset is carried in the synchronization signal block or a system message.

In a possible design, the target beam includes at least one of the following: a service beam, a synchronization signal block beam, and a random access channel occasion RO beam.

In a possible design, the second information includes at least one piece of indication information. The at least one piece of indication information includes first indication information. The first indication information includes an index of the first beam sweeping pattern or a pattern indication sequence. The pattern indication sequence indicates a coverage order and/or a coverage time that are/is of the target beam for a plurality of beam positions and that are/is indicated by the first beam sweeping pattern. Alternatively, the first indication information indicates a first search space, and the first search space corresponds to the first beam sweeping pattern.

In a possible design, the at least one piece of indication information further includes second indication information or third indication information. The second indication information indicates a second offset, and the second offset includes an offset between a start time of a beam sweeping period and a first reference time. The third indication information indicates a validity period of the first beam sweeping pattern, and the validity period is greater than or equal to the beam sweeping period.

In a possible design, the first reference time is a time-domain resource start time of the synchronization signal block or a time-domain resource start time of the second information.

In a possible design, the at least one piece of indication information further includes fourth indication information, and the fourth indication information indicates a duration of the beam sweeping period.

In a possible design, a correspondence between the first search space and the first beam sweeping pattern is preset; or the correspondence between the first search space and the first beam sweeping pattern is carried in the synchronization signal block or the system message.

In a possible design, the first indication information includes an index of the first search space.

In a possible design, the first search space is a common search space or a dedicated search space.

In a possible design, the second information further includes an indication of a first terminal device group. The indication of the first terminal device group identifies that the second information is configured for a terminal device in the first terminal device group. Alternatively, the second information further includes an identifier of a target terminal device.

In a possible design, the at least one piece of indication information is at least one indication sequence. Alternatively, the second information is carried in downlink control information DCI, and the at least one piece of indication information is at least one indication field in the DCI.

In a possible design, the DCI is scrambled by using a radio network temporary identifier RNTI of the first terminal device group. Alternatively, the DCI is scrambled by using a cell radio network temporary identifier C-RNTI of the target terminal device. Alternatively, the DCI is scrambled by using a common RNTI.

In a possible design, the DCI further includes a control field, and the control field indicates control information for resource scheduling.

In a possible design, when a quantity of the at least one indication sequence is greater than one, the at least one indication sequence is mutually orthogonal.

For technical effects that can be achieved in the fourth aspect, refer to the descriptions of the technical effects that can be achieved in the third aspect.

According to a fifth aspect, an embodiment of this application provides a communication method. The method may be applied to a terminal device. The terminal device herein may be the terminal device itself, or may be a processor, a module, a chip, a chip system, or the like that is in the terminal device and that implements the method. The method may include the following steps.

The terminal device receives indication information from a network device. The indication information indicates a first beam, and the first beam is a beam at one beam position in beams at a plurality of beam positions indicated by a first beam sweeping pattern. The terminal device determines a time-frequency resource position of the first beam based on a time-frequency resource position of the indication information and a first offset. The terminal device transmits a signal based on the time-frequency resource position of the first beam.

In the method, the network device may notify the terminal device through the indication information before the first beam covers/revisits a beam position of the first beam. In this way, the terminal device may accurately determine the time-frequency resource position of the first beam based on the time-frequency resource position of the indication information, so that a local operation may be adjusted based on the time-frequency resource position of the first beam to transmit a signal. According to the method, the network device does not need to perform beam configuration for the terminal device through higher-layer signaling. Instead, the network device quickly performs beam configuration for the terminal device through the indication information. Therefore, this manner can improve efficiency of beam configuration for the terminal device and meet a requirement of a high-dynamic beam configuration.

In a possible design, the first offset is preset; or the first offset is carried in the synchronization signal block or a system message.

In a possible design, the indication information includes first information of the first beam, and the first information indicates a geographical coverage area of the first beam or an index of the first beam.

In a possible design, to clearly indicate a receiving object of the indication information, the indication information may further include an indication of a first terminal device group. The indication of the first terminal device group identifies that the indication information is configured for a terminal device in the first terminal device group, and the terminal device belongs to the first terminal device group. Alternatively, the indication information may further include an identifier of the terminal device.

In a possible design, the first information is an indication sequence. Alternatively, the indication information is carried in downlink control information DCI, and the first information is an indication field in the DCI.

According to this design, the network device may notify the terminal device of a time-frequency resource position of the first beam by using the indication sequence or the DCI, so that the terminal device can learn of coverage information of the first beam as soon as possible, and may transmit a signal based on the time-frequency resource position of the first beam by adjusting a local configuration. The network device does not need to notify the terminal device of the time-frequency resource position of the first beam through higher-layer signaling. Therefore, the two manners can meet a requirement of a high-dynamic beam configuration.

In a possible design, the DCI is scrambled by using a radio network temporary identifier RNTI of the first terminal device group, and the terminal device belongs to the first terminal device group. Alternatively, the DCI is scrambled by using a cell radio network temporary identifier C-RNTI of the terminal device. Alternatively, the DCI is scrambled by using a common RNTI.

According to this design, the network device may scramble the DCI carrying the indication information, so that a specific terminal device can parse the DCI, to perform beam configuration for the specific terminal device.

In a possible design, the DCI further includes a control field, and the control field indicates control information for resource scheduling.

In a possible design, the terminal device may further receive configuration information from the network device. The configuration information indicates a first beam sweeping pattern.

According to a sixth aspect, an embodiment of this application provides a communication method. The method may be applied to a network device. The network device herein may be the network device itself, or may be a processor, a module, a chip, a chip system, or the like that is in the network device and that implements the method. The method includes the following steps.

The network device sends indication information. The indication information indicates a first beam, and the first beam is a beam at one beam position in beams at a plurality of beam positions indicated by a first beam sweeping pattern. The network device transmits a signal by using the first beam. An offset between a time-frequency resource position of the first beam and a time-frequency resource position of the indication information is a first offset.

In a possible design, the first offset is preset; or the first offset is carried in the synchronization signal block or a system message.

In a possible design, the indication information includes first information of the first beam, and the first information indicates a geographical coverage area of the first beam or an index of the first beam.

In a possible design, the indication information further includes an indication of a first terminal device group. The indication of the first terminal device group identifies that the indication information is configured for a terminal device in the first terminal device group. Alternatively, the indication information further includes an identifier of a target terminal device.

In a possible design, the first information is an indication sequence. Alternatively, the indication information is carried in downlink control information DCI, and the first information is an indication field in the DCI.

In a possible design, the DCI is scrambled by using a radio network temporary identifier RNTI of the first terminal device group. Alternatively, the DCI is scrambled by using a cell radio network temporary identifier C-RNTI of the target terminal device. Alternatively, the DCI is scrambled by using a common RNTI.

In a possible design, the DCI further includes a control field, and the control field indicates control information of a physical downlink shared channel PDSCH.

In a possible design, the network device may further send configuration information. The configuration information indicates a first beam sweeping pattern.

For technical effects that can be achieved in the sixth aspect, refer to the descriptions of the technical effects that can be achieved in the fifth aspect.

According to a seventh aspect, an embodiment of this application provides a communication apparatus, including units configured to perform steps in any one of the first aspect to the sixth aspect. Optionally, the communication apparatus may include a communication unit and a processing unit. The communication unit is configured to receive and send data, and the processing unit is configured to perform the method provided in any one of the foregoing aspects.

According to an eighth aspect, an embodiment of this application provides a communication device, including a transceiver and a processor. The transceiver is configured to receive and send a signal, and the processor is configured to execute program instructions, so that the communication device performs the method provided in any one of the foregoing aspects. Optionally, the communication device further includes a memory. The memory is configured to store program instructions. The processor may read the program instructions in the memory, so that the communication device performs the method provided in any one of the foregoing aspects.

According to a ninth aspect, an embodiment of this application provides a communication device, including at least one processing element and at least one storage element. The at least one storage element is configured to store a program and data, and the at least one processing element is configured to perform the method provided in any one of the foregoing aspects of this application.

According to a tenth aspect, an embodiment of this application provides a communication system, including: the terminal device configured to perform the first aspect and the network device configured to perform the second aspect; or the terminal device configured to perform the third aspect and the network device configured to perform the fourth aspect; or the terminal device configured to perform the fifth aspect and the network device configured to perform the sixth aspect.

According to an eleventh aspect, an embodiment of this application further provides a computer program product. When the computer program product is run on a computer, the computer is enabled to perform the method according to any one of the foregoing aspects. Optionally, the computer may be a communication device such as a terminal device or a network device.

According to a twelfth aspect, an embodiment of this application further provides a computer-readable storage medium. The computer-readable storage medium stores a computer program. When the computer program is executed by a computer, the computer is enabled to perform the method provided in any one of the foregoing aspects. Optionally, the computer may be a communication device such as a terminal device or a network device.

According to a thirteenth aspect, an embodiment of this application further provides a chip. The chip is configured to read a computer program stored in a memory, to perform the method provided in any one of the foregoing aspects. Optionally, the chip may include a processor. The processor is coupled to the memory, and is configured to read the computer program stored in the memory, to implement the methods provided in the foregoing embodiments. Optionally, the chip may further include components such as a memory, a communication interface, and a power supply module. The memory is configured to store a computer program; the communication interface is configured to receive and send data; and the power supply module is configured to supply power to the processor.

According to a fourteenth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1A is a diagram of a beam according to this application;
FIG. 1B is a diagram of a beam hopping technology according to this application;
FIG. 2A to FIG. 2D are diagrams of typical application scenarios of a satellite-ground integrated network according to an embodiment of this application;
FIG. 3 is a flowchart of a communication method according to an embodiment of this application;
FIG. 4 is a diagram of beam indication information according to an embodiment of this application;
FIG. 5A and FIG. 5B are diagrams of a relative relationship between a coverage start time of a target beam and a first reference time according to an embodiment of this application;
FIG. 6 is a flowchart of another communication method according to an embodiment of this application;
FIG. 7 is a flowchart of still another communication method according to an embodiment of this application;
FIG. 8 is a diagram of a structure of a communication apparatus according to an embodiment of this application; and
FIG. 9 is a diagram of a structure of a communication device according to an embodiment of this application.

### DESCRIPTION OF EMBODIMENTS

This application provides a communication method and apparatus for providing beam configuration for a terminal device, to meet a requirement of a high-dynamic beam configuration. The method and the apparatus are based on a same technical concept. Because problem-resolving principles of the method and the apparatus are similar, mutual reference may be made to implementations of the apparatus and the method. Repeated details are not described.

In the following, some terms in this application are described, to help a person skilled in the art have a better understanding.
(1) An NTN is proposed relative to a conventional terrestrial network and is a network established by using a non-terrestrial communication technology, and may include but is not limited to a network that performs a communication service by using a spectrum resource on a communication platform, for example, a satellite platform, an uncrewed aerial vehicle (unmanned aerial vehicle, UAV) platform, or a high-altitude platform station (high altitude platform station, HAPS).

For example, the NTN may include but is not limited to a satellite system, a UAV communication system, and a HAPS system. Based on different altitudes of a satellite (that is, an orbital altitude of the satellite) from the earth surface, the satellite system may be classified into a geostationary earth orbit (geostationary orbit, GEO) satellite system, a medium earth orbit (meddle earth orbit, MEO) satellite system, and a low earth orbit (low earth orbit, LEO) satellite system.

Compared with a terrestrial communication network, the NTN has features such as wider coverage, a higher path loss, a larger delay, a higher speed, and lower costs. With growing interest in NTN research, the 3rd Generation Partnership Project (3rd generation partnership project, 3GPP) has also conducted standardization research on the NTN, and is committed to supplementing or enhancing communication performance of a mobile communication system through construction of the NTN. For example, the 3GPP has started research on satellite-ground integration and related solutions since Release 14 (release 14, R14).

(2) A terminal device is a device that provides voice and/or data connectivity for a user and can access a network device through a wireless interface. The terminal device may also be referred to as user equipment (user equipment, UE), a mobile station (mobile station, MS), a mobile terminal (mobile terminal, MT), or the like. In this application, the terminal device may be at a fixed location, or may be mobile. This is not limited in this application.

For example, the terminal device may be a handheld device with a wireless connection function, various in-vehicle devices, a roadside unit, an internet-of-things terminal, an access terminal, a terminal in V2X communication, a subscriber unit, a subscriber station, a mobile station, a mobile console, a remote station, a remote terminal, a mobile device, a user terminal, a terminal, a wireless communication device, a user agent, a user apparatus, or the like. Currently, some examples of the terminal device are: a mobile phone (mobile phone), a tablet computer, a notebook computer, a palmtop computer, a mobile internet device (mobile internet device, MID), a smart point of sale (point of sale, POS) terminal, a wearable device, a virtual reality (virtual reality, VR) device, an augmented reality (augmented reality, AR) device, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, an in-vehicle device, a wearable device, a terminal device in a future 5G network or a terminal device in a future evolved public land mobile communication network (public land mobile network, PLMN), a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electric meter, and a smart gas meter), an on-board electronic control unit (electronic control unit, ECU), an on-board computer, an on-board cruise system, an in-vehicle telematics box (telematics box, T-BOX), a UE unit, a UE station, a mobile station, a remote station, a remote terminal device, a mobile device, a wireless communication device, a UE agent, a UE apparatus, and the like.

The terminal device may directly communicate with the network device, or may communicate with the network device through a relay station. The terminal device may communicate with a plurality of network devices supporting different communication technologies. For example, the terminal device may communicate with a base station supporting an LTE network, or may communicate with a base station supporting a 5G network, or may further support dual connectivity to both the base station supporting the LTE network and the base station supporting the 5G network.

(3) A network device is an entity that is on a network side of a communication system and that has a wireless transceiver function. In embodiments of this application, the network device may include but is not limited to a base station carried on a satellite (briefly referred to as a satellite base station), a transmission reception point (transmission receiving point/transmission reception point, TRP) or a distributed unit (distributed unit, DU) carried on a satellite, a satellite ground station in a satellite system (which may be briefly referred to as a ground station), a balloon station, an uncrewed-aerial-vehicle station, or the like.

A standard of the network device is not limited in embodiments of this application. For example, the network device may be a NodeB (NodeB), an evolved NodeB (evolved NodeB, eNB), a next-generation NodeB (generation NodeB, gNB), or a network device of another standard evolved based on the foregoing network device.

A type of the network device is not limited in embodiments of this application. For example, the network device may be an access point (access point, AP), a wireless fidelity (wireless-fidelity, Wi-Fi) AP, a home base station (for example, a home evolved NodeB, or a home NodeB, HNB), a wireless relay node, a wireless backhaul node, a macro base station, a micro base station, a pico base station, a small cell, or a relay station.

A specific technology and a specific device form used by the network device are not limited in embodiments of this application. The network device may correspond to an eNB in a 4G system, and correspond to a gNB in a 5G system.

In addition, in a network structure, the network device may include a central unit (centralized unit, CU) node and a distributed unit (distributed unit, DU) node. In this structure, protocol layers of the network device are split. Functions of some protocol layers are centrally controlled by the CU, functions of some or all of remaining protocol layers are distributed in the DU, and the CU centrally controls the DU.

For example, functions of a PDCP layer and a protocol layer above the PDCP layer may be set on the CU, and functions of protocol layers (for example, an RLC layer and a MAC layer) below the PDCP layer are set on the DU. It should be noted that such protocol layer division is merely an example, and division may alternatively be performed at another protocol layer. A radio frequency apparatus may be remotely deployed and not disposed in the DU, or may be integrated into the DU, or may be partially remotely disposed and partially integrated into the DU. This is not limited in embodiments of this application. In addition, in some embodiments, a control plane (control plan, CP) and a user plane (user plan, UP) of the CU may be further separated into different entities for implementation, where the entities are respectively a control-plane CU entity (CU-CP entity) and a user-plane CU entity (CU-UP entity).

In this network architecture, signaling generated by the CU may be sent to the terminal device through the DU, or signaling generated by the terminal device may be sent to the CU through the DU. The DU may directly encapsulate the signaling at a protocol layer and then transparently transmit the signaling to the terminal device or the CU without parsing the signaling. In this network architecture, the CU is classified as a network device on a radio access network (radio access network, RAN) side. In addition, the CU may alternatively be classified as a network device on a core network (core network, CN) side. This is not limited in this application.

(4) A search space (search space, SS) is a time-frequency resource that is configured by a network device and that is used by a terminal device to receive information (for example, downlink control information (downlink control information, DCI) or a control signal of another type).

In a communication system, a time-frequency resource of a physical downlink control channel (physical downlink control channel, PDCCH) is shared. Therefore, the time-frequency resource of the PDCCH may be greater than a time-frequency resource requirement of a single terminal device. If the terminal device cannot determine information such as a DCI format (format), a resource aggregation level, and a radio network temporary identifier (radio network tempory identity, RNTI) to be used by the terminal device, the terminal device needs to try a plurality of combinations to receive the DCI. This reduces efficiency of receiving the DCI by the terminal device, and also causes a waste of power consumption. Based on this, a purpose of configuring a search space in the communication system is to provide a search configuration for the terminal device, to narrow a search range of the terminal device and improve search efficiency of the terminal device.

Based on a receiving object (or a type of transmitted information) of information to be transmitted in the search space, the search space may be classified into two types, namely, a common search space (common search space, CSS) and a dedicated search space. The dedicated search space may also be referred to as a UE-specific search space (UE-specific search space, USS), and the term USS may be used hereinafter to represent the dedicated search space.

(5) A geographical coverage area of a beam may be represented by using a beam position of the beam, or may be represented by using physical location information (for example, coordinates, longitudes and latitudes, and region identifiers) of a beam coverage area.

In embodiments of this application, a geographical coverage area of a beam, a beam position of the beam, and physical location information of the beam may be mutually replaced.

(6) A synchronization signal block is periodically transmitted by a network device, and is used by a terminal device to implement time-frequency synchronization with the network device in a cell search process.

In a first implementation, the synchronization signal block includes a primary synchronization signal (primary synchronization signal, PSS) and a secondary synchronization signal (secondary synchronization signals, SSS). In this case, the synchronization signal block may be denoted as a synchronization signal block, referred to as SSB for short.

In a second implementation, the synchronization signal block not only includes a PSS and an SSS, but also includes a physical broadcast channel (physical broadcast channel, PBCH), for example, a synchronization signal block defined in a 5G mobile communication system (namely, a new radio (new radio, NR) system). In this case, the synchronization signal block may be denoted as a synchronization signal broadcast channel block (SS/PBCH block, or SS/PBCH block).

In a third implementation, based on structures of the synchronization signal blocks provided in the foregoing two embodiments, in this implementation, the synchronization signal block may be classified into two types. By default, the synchronization signal block includes a PSS, an SSS, and a PBCH. In a special case, the synchronization signal block includes a PSS and an SSS, and does not include a PBCH. In this case, the synchronization signal block may also be referred to as a default synchronization signal block.

A specific structure of the synchronization signal block is not limited in embodiments of this application. To be specific, in descriptions of embodiments, the synchronization signal block, the SSB, and the SS/PBCH block represent a same concept, and the three may be replaced with each other.
(7) Time in embodiments of this application may be measured using a conventional time unit such as a second, a millisecond, or a microsecond, or may alternatively be measured using a time unit defined for a time-domain resource in the communication field. For example, the time unit in the communication field may include but is not limited to a subframe (subframe), a slot (slot), a symbol (symbol), or the like. This is not limited in this application.
(8) RRC connection status. In a communication system, an RRC connection status of a terminal device includes three types: an RRC connected state (RRC_connected, connected state for short), an RRC idle state (RRC_idle, idle state for short), and an RRC inactive state (RRC_inactive, inactive state for short). The RRC idle state and the RRC inactive state may be collectively referred to as an RRC non-connected state.

When the terminal device is in the idle state, an RRC connection between the terminal device and a network device is released (release), the network device and the terminal device no longer store context information of the terminal device, and the terminal device may receive broadcast information (for example, system information) and a paging message that are sent by the network device.

When the terminal device is in the inactive state, the RRC connection between the terminal device and the network device is suspended (suspend), but the terminal device and the terminal device continue to store the context information of the terminal device. When the terminal device enters the connected state from the inactive state, the network device and the terminal device may quickly restore the RRC connection between the terminal device and the network device based on the stored context information of the terminal device, so that the terminal device can quickly restore to the connected state.

When the terminal device is in the connected state, there is the RRC connection between the terminal device and the network device, and the terminal device and the network device can communicate with each other through the RRC connection.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following" or a similar expression thereof indicates any combination of these items, including a single item or any combination of a plurality of items. For example, at least one of a, b, or c may represent: a, b, c, a and b, a and c, b and c, or a, b and c, where a, b, and c may be singular or plural.

In embodiments of this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

It should be noted that in this application, "indicating" may include directly indicating and indirectly indicating. When a piece of information is described to indicate A, the information may directly indicate A or indirectly indicate A, but it does not mean that the information necessarily carries A. In an example in which first information indicates first content, the first information may include the first content, or may include a part of the first content or an identifier, an index, or the like of the first content, or may include an algorithm, a calculation parameter, or the like for determining the first content. An "indicating" manner is not limited in this application.

In this application, "containing/including/carrying A" may be equivalent to "containing/including/carrying information A". The information A indicates A.

In addition, it should be understood that in descriptions of embodiments of this application, terms such as "first" and "second" are merely used for distinguishing and description, but should not be understood as an indication or implication of relative importance, and should not be understood as an indication or implication of a sequence.

The following first describes several technologies related to beams.

### 1. Beamforming (beam forming)

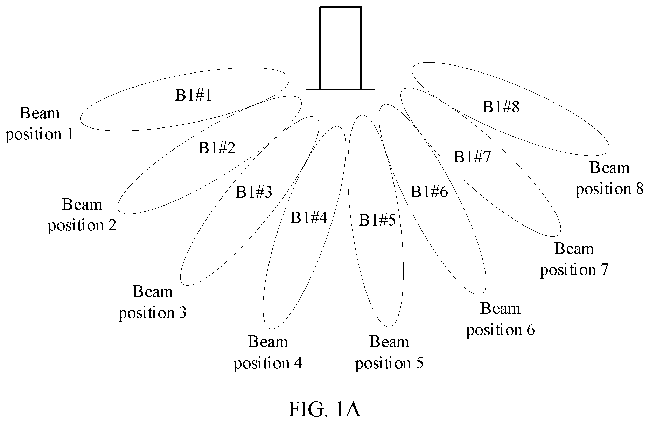

With development of large-scale antenna technologies, a beamforming (beam forming) technology has been introduced into a mobile communication system, to meet user demands for a transmission rate, a system capacity, and the like of the mobile communication system. Beamforming is a signal preprocessing technology based on an antenna array. A weighting system of each array source in the antenna array is adjusted to generate a directional beam shown in FIG. 1A, so that an obvious transmission gain can be obtained.

To distinguish a direction/coverage area of a beam, a concept of a beam position is introduced in the communication field. Still as shown in FIG. 1A, beams at different beam positions point to different directions, and corresponding coverage areas are also different. It should be noted that, when a communication device managing the beam is mobile, a coverage area of a beam at a same beam position may also change as time progresses and the communication device moves. In embodiments of this application, the beam may be identified by a beam position.

Beamforming is a signal processing technology that uses a sensor array (that is, an antenna array) to send and receive a signal in a directional manner. In the beamforming technology, a parameter of a basic unit of a phase array is adjusted, so that signals at some angles obtain constructive interference, and signals at some other angles obtain destructive interference, to implement signal enhancement at some angles and in some directions.

An ultimate objective of beamforming is that the network device and the terminal device establish and maintain an appropriate beam pair (beam pair) through beam management, to ensure a signal transmission gain between the network device and the terminal device. Under normal circumstances, an optimal beam pair in a downlink direction is also an optimal beam pair in an uplink direction, which is referred to as beam correspondence (beam correspondence).

On a network device side, based on content transmitted by the network device by using a beam, managed beams may be classified into the following types, including but not limited to:
a synchronization signal block beam, used by the network device to transmit a synchronization signal block;
a service beam, used by the network device to transmit service data, where the service beam may be classified into an uplink service beam and a downlink service beam based on uplink and downlink directions; and
a random access channel (random access channel, RACH) occasion (RACH occasion, RO) beam, used by the terminal device to perform random access, where a time-frequency resource of the RO beam includes a RACH resource (for example, an RO).

In a beam management process and a service implementation process, the network device may separately transmit signals by using beams at different beam positions. This process is referred to as beam sweeping. For example, in a beam management process, the network device may separately transmit corresponding reference signals by using different beams. For another example, the network device may separately transmit service data by using different service beams, to perform service communication with a plurality of terminal devices within a coverage area. For still another example, the network device may transmit synchronization signal blocks uniformly across the coverage area by using different synchronization signal block beams.

### 2. Beam hopping technology

In some scenarios, to implement wide-area coverage, a network device in a mobile communication system usually requires hundreds or even thousands of beams. This requires the network device to be supported by a powerful antenna array scale and high computational efficiency, which in turn increases load of the network device. However, in some scenarios, reducing load and increasing coverage are two mutually contradictory research directions for the network device.

To alleviate a contradiction between load and coverage of the network device, a beam hopping technology emerges. Based on the beam hopping technology, the network device may be configured with a small quantity of beams (for example, dozens of beams), and the beams serve all coverage areas of the network device in a time division manner. To be specific, the network device switches beams in a time sequence, so that the network device can cover one portion of an area by using a beam in a period of time, and cover another portion of the area by using the beam in another period of time. When the network device covers one portion of an area or an angle again by using the beam, this phenomenon may be referred to as beam revisit.

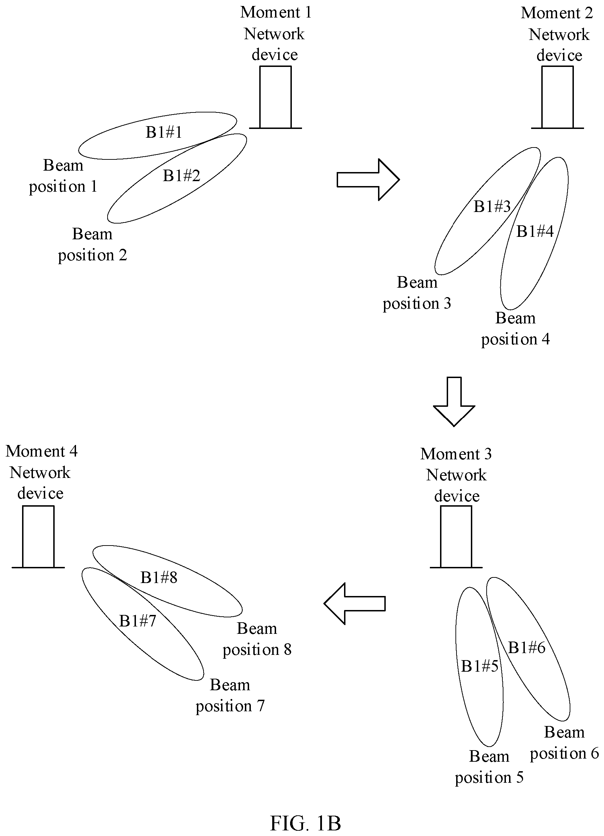

FIG. 1B is used as an example for description. In a time period from a moment 1 to a moment 4, a beam coverage order of the network device is as follows: a beam position 1 and a beam position 2 → a beam position 3 and a beam position 4 → a beam position 5 and a beam position 6 → a beam position 7 and a beam position 8. A coverage time of a beam in each beam position may be the same or may be different. It should be noted that at a same moment, the network device may configure beams at one or more beam positions for coverage. FIG. 1B is used as an example and constitutes no limitation thereto.

Within a beam sweeping period, a coverage order and/or a coverage time (that is, a beam sweeping rule of the network device) in which the network device schedules beams at different beam positions may be referred to as a beam sweeping pattern (pattern). In other words, the beam sweeping pattern may indicate a coverage order and/or a coverage time of beams at different beam positions. In the mobile communication system, the beam sweeping pattern used by the network device may be configured for the terminal device through higher-layer signaling (for example, RRC signaling), so that the terminal device can configure an antenna parameter by adjusting a local operation, thereby performing transmission by using a beam corresponding to a current beam of the network device. In this way, power consumption of the terminal device can be reduced, and communication efficiency of the terminal device can also be ensured.

However, due to complexity and variability of an application scenario, there is a high dynamic requirement for beam scheduling of the network device. For example, due to significant differences in service distribution within the coverage area of the network device, beam scheduling needs to be performed for a specific region. For some sudden interference, the network device needs to adjust a beam for avoidance. For some burst services, the network device needs to schedule a beam to support coverage. For such a scenario, a configuration period of higher-layer signaling is long, and a requirement of a high-dynamic beam configuration cannot be met.

To provide beam configuration for the terminal device and meet a requirement of a high-dynamic beam configuration, embodiments of this application provide several embodiments. The following describes embodiments of this application in detail with reference to the accompanying drawings.

The communication method provided in embodiments of this application may be applied to any communication system supporting a beam hopping technology. Because a network device usually supports a beam hopping technology in an NTN scenario, in this application, a satellite system in the NTN is used as an example to describe a communication system to which embodiments of this application are applicable.

In the satellite system, a terminal device located on the ground accesses a network through an air interface. A base station may be deployed on a satellite, or may be deployed on the ground (in this case, the satellite has a relay function). Optionally, some functions of the base station may be deployed on the satellite, and the other functions may be deployed on the ground. The satellite may communicate with a ground station through a radio link, and further communicate with a base station and a core network in a terrestrial network.

The following describes functions of network elements in the satellite system.

The terminal device may access the satellite system through the air interface and initiates services such as calls and internet access. For details about the descriptions and examples, refer to the descriptions in Point (2).

The base station provides a wireless access service for the terminal device, schedules a radio resource for a connected terminal device, and provides a reliable wireless transmission protocol, a data encryption protocol, and the like. For details about the descriptions and examples, refer to the foregoing term explanation of the network device in Point (3).

The core network is used for implementing services such as user access control, mobility management, session management, user security authentication, and charging. The core network includes a plurality of functional units, which may be classified into a control plane functional unit and a data plane functional unit.

For example, the control plane functional unit may include a session management function (session management function, SMF) network element, an access and mobility management function (access and mobility management function, AMF) network element, a unified data management (unified data management, UDM) entity, a policy control function (policy control function, PCF) entity, and the like. The AMF network element is responsible for user access management, security authentication, and mobility management. The SMF network element is responsible for session management.

The data plane functional unit may include a user plane function (user plane function, UPF) network element. The UPF network element is responsible for functions such as user plane data transmission management, traffic statistics, and security eavesdropping.

The ground station is used to connect the satellite to the terrestrial network and is responsible for forwarding signaling and service data between the satellite and a base station or a core network in the terrestrial network. The ground station may also be referred to as a gateway (gateway), a satellite ground station, an earth station, or the like.

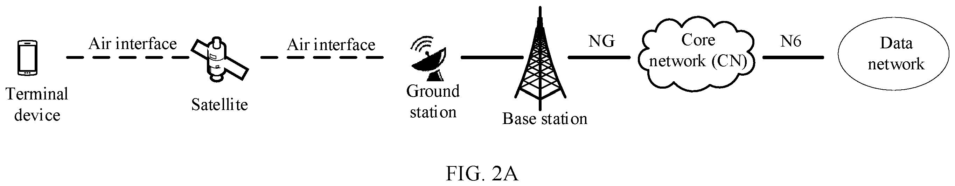

Based on a communication mode of a satellite, the satellite system may have a bentpipe (Bentpipe) mode and a regenerative (Regenerative) mode. The following provides descriptions with reference to examples of several typical application scenarios of the satellite-ground integrated network shown in FIG. 2A to FIG. 2D.

In the bentpipe mode, the satellite has a function of performing signal frequency conversion and forwarding. As shown in FIG. 2A, an air-interface (for example, Uu-interface) connection is established between the terminal device and the satellite, and between the satellite and the ground station. The satellite is equivalent to a repeater and is used to forward a signal between the satellite and the ground station. There is a communication connection between the ground station and a base station in the terrestrial network. The base station may communicate with the core network (core network, CN) through an NG interface (for example, an N2 interface or an N3 interface), and the core network communicates with the data network (data network, DN) through an N6 interface.

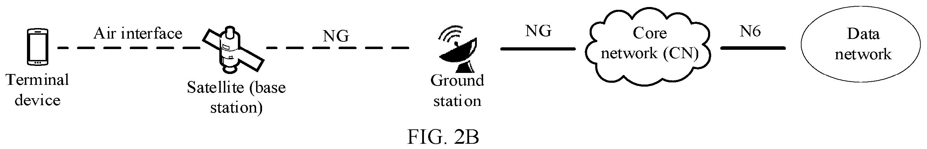

In a satellite system in the regenerative mode, as shown in FIG. 2B to FIG. 2D, a base station or a DU in a base station may be carried on the satellite. The satellite can parse and process a signal received from the ground station, and send the processed signal to the terminal device, thereby implementing signal regeneration.

As shown in FIG. 2B, a base station is carried on the satellite. In this case, the satellite may be referred to as a satellite base station. The terminal device may establish a communication connection to the satellite through an air interface, while the satellite may establish a communication connection to a core network through an NG interface by using the ground station. Optionally, in another scenario, the satellite may alternatively establish a communication connection to the base station in the terrestrial network through an Xn interface by using the ground station, while the base station in the terrestrial network establishes a communication connection to the core network through an NG interface. The core network and the DN communicate with each other through an N6 interface.

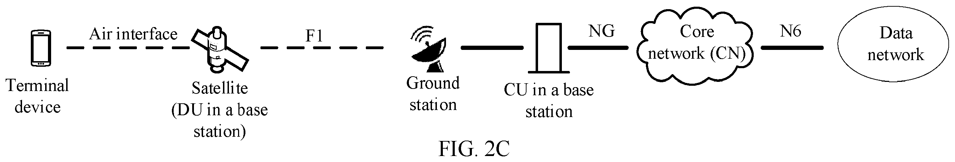

As shown in FIG. 2C, a DU in the base station is carried on the satellite, while the ground station may be connected to a CU in a base station deployed in the terrestrial network. The terminal device may establish a communication connection to the satellite through an air interface, while the satellite may establish a communication connection to the CU through an F1 interface by using the ground station. For an interface between the CU, the core network, and the DN, refer to in FIG. 2B. Details are not described herein again.

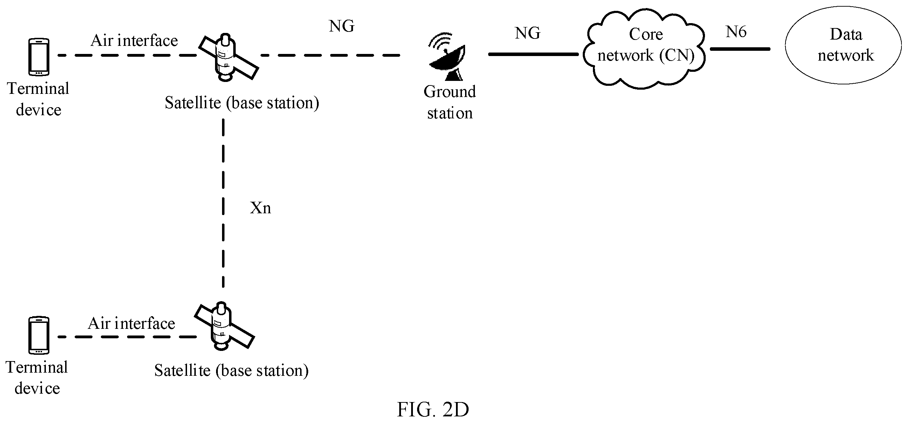

Compared with the scenario shown in FIG. 2B, the application scenario shown in FIG. 2D adds communication of (between) satellites (base stations). That is, the terminal device may access a network by using one satellite (base station) or more satellite base stations. As shown in the figure, a satellite (base station) and a satellite (base station) may communicate with each other through an Xn interface.

In application scenarios shown in FIG. 2A to FIG. 2D, the base station (or the CU and the DU in the base station) (for example, a satellite carrying a base station, a base station located in the terrestrial network, or a satellite carrying the DU and the DU located in the terrestrial network) may provide a service for a terminal device within a coverage area of the base station by using a beamforming technology. Because a coverage area of a base station in a satellite system is large, the base station may use a beam hopping technology to neutralize a conflict between load and coverage.

The following describes interfaces between network elements in the application scenarios shown in FIG. 2A to FIG. 2D.

The air interface indicates a radio link between the terminal device and the base station. For example, the air interface may be a Uu interface.

The Xn interface is an interface between base stations and is mainly used for signaling exchange, for example, handover.

The NG interface is an interface between the base station and the core network, and is mainly for exchanging non-access stratum (non-sccess stratum, NAS) signaling and service data of a user. For example, the NG interface may include an N2 interface, an N3 interface, and the like.

It should be noted that one satellite or one ground station is shown in some application scenarios shown in FIG. 2A to FIG. 2D. In an actual scenario, an architecture of a plurality of satellites and/or a plurality of ground stations may be used as required. Each satellite may provide a communication service for one or more terminal devices, each ground station may correspond to one or more satellites, and each satellite may correspond to one or more ground stations. This is not specifically limited in embodiments of this application.

It should be noted that the satellite systems shown in FIG. 2A to FIG. 2D do not constitute a limitation on a communication system to which embodiments of this application are applicable. The communication method provided in embodiments of this application may be further applied to various communication systems. In addition, embodiments of this application impose no limitation on a mobile communication system standard of a terrestrial network in a satellite system. For example, the terrestrial network may be a long term evolution (long term evolution, LTE) communication system, a 5th generation (the 5th Generation, 5G) communication system (also referred to as a 5G new radio (new radio, NR) system), or a future communication system.

It may be learned from the foregoing descriptions that, in the communication systems supporting beam hopping shown in FIG. 2A to FIG. 2D, the network device usually configures a beam sweeping pattern for the terminal device through higher-layer signaling. However, there is a high-dynamic requirement for beam scheduling of the network device, whereas a configuration period of higher-layer signaling is long, and the requirement cannot be met. Based on this, this application provides the following embodiments for providing beam configuration for a terminal device, to meet a requirement of a high-dynamic beam configuration. The following embodiments or instances may be applied to any communication system supporting a beam hopping technology, for example, a satellite system in an NTN scenario. Based on this, a network device in each embodiment or instance is a device that provides an access service for a terminal device on a network side, for example, a base station, a satellite, or a DU.

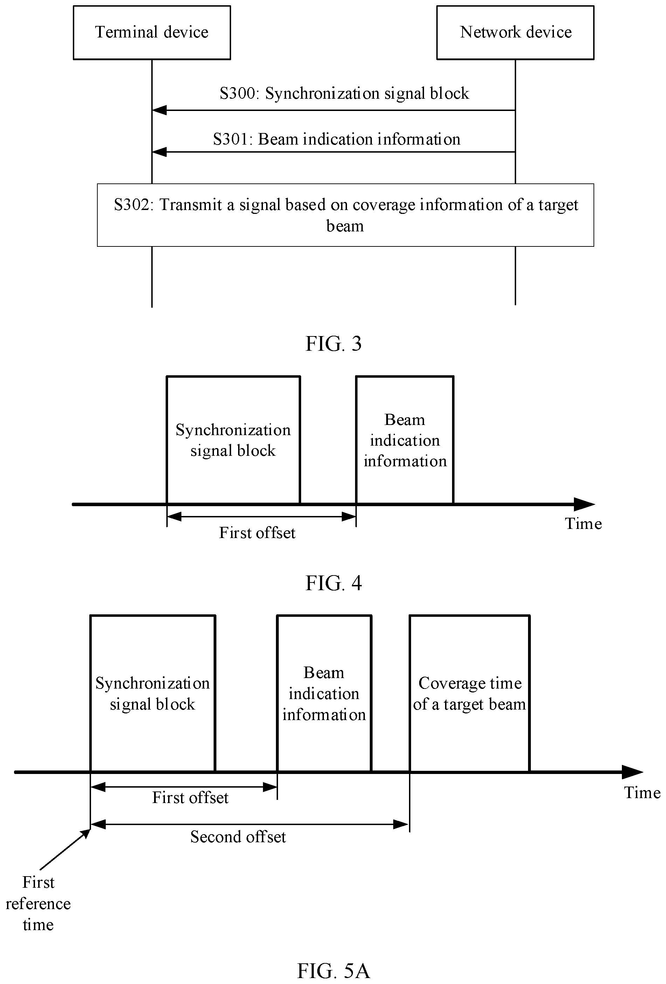

Embodiment 1: An embodiment of this application provides a communication method. The following describes the method with reference to a flowchart shown in FIG. 3.

S301: A network device determines beam indication information, and sends the beam indication information. A terminal device receives the beam indication information from the network device. The beam indication information indicates coverage information of a target beam of the network device. The coverage information of the target beam includes at least one of the following: a coverage time of the target beam, a frequency-domain resource of the target beam, or a geographical coverage area of the target beam.

In an implementation, there is an association relationship between a time-frequency resource of the beam indication information and a time-frequency resource of a synchronization signal block. In this way, the terminal device may determine the time-frequency resource of the beam indication information based on the time-frequency resource of the synchronization signal block, thereby improving efficiency of receiving the beam indication information.

In this implementation, the network device may further send the synchronization signal block through S300. An offset between a time-frequency resource position of the synchronization signal block and a time-frequency resource position of the beam indication information is a first offset. After receiving the synchronization signal block from the network device in S300, the terminal device may determine the time-frequency resource position of the beam indication information based on the time-frequency resource position of the synchronization signal block and the first offset. For example, as shown in FIG. 4, an offset between a time-domain resource start position of a synchronization signal block and a time-domain resource start position of the beam indication information is the first offset.

Optionally, the first offset may be preset, for example, specified in a communication protocol. Optionally, the first offset may alternatively be obtained by the network device through message notification to the terminal device. For example, the first offset is carried in the synchronization signal block or a system message (for example, a system information block (system information block, SIB) or a master information block (master information block, MIB)), so that the network device may notify the first offset to a terminal device within a coverage area.

It should be further noted that when the first offset is equal to a width of a time-domain resource and/or a width of a frequency-domain resource of the synchronization signal block, a time-frequency resource end position of the synchronization signal block is the same as a time-frequency resource start position of the beam indication information. In other words, the beam indication information and the synchronization signal block may form a new signal. The new signal includes not only a conventional synchronization signal block, but also the beam indication information. The new signal may be referred to as an enhanced synchronization signal block, for example, an enhanced SSB (enhance-SSB, E-SSB).

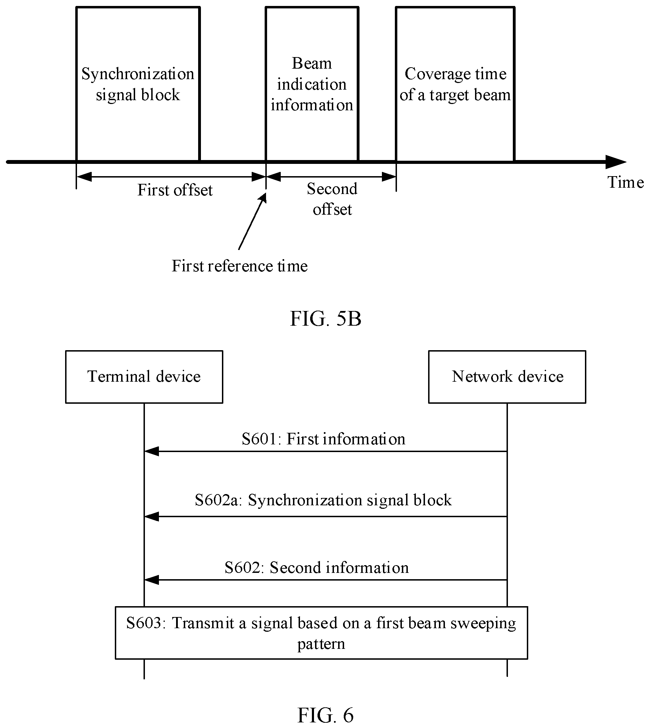

In an implementation, the beam indication information includes at least one piece of indication information that respectively indicates different coverage information of the target beam. Optionally, based on a difference between content indicated by indication information in the beam indication information, implementations of the beam indication information are as follows:
Implementation 1: When the coverage information of the target beam includes the coverage time of the target beam, the at least one piece of indication information includes first indication information, and the first indication information may directly or indirectly indicate a coverage start time of the target beam. For example, the first indication information indicates a second offset, and the second offset includes an offset between the coverage start time of the target beam and a first reference time. For example, the first reference time may be a time-domain resource start time of the synchronization signal block, as shown in FIG. 5A. Alternatively, the first reference time may be a time-domain resource start time of the beam indication information, as shown in FIG. 5B.
Implementation 2: When the coverage information of the target beam includes the frequency-domain resource of the target beam, the at least one piece of indication information includes second indication information, and the second indication information may directly or indirectly indicate a start position of the frequency-domain resource of the target beam. For example, the second indication information indicates a third offset, and the third offset includes an offset between the start position of the frequency-domain resource of the target beam and a start position of a first reference frequency-domain resource. For example, the first reference frequency-domain resource may be, but is not limited to, a frequency-domain resource of the synchronization signal block or a frequency-domain resource of the beam indication information.
Implementation 3: When the coverage information of the target beam includes the geographical coverage area of the target beam, the at least one piece of indication information includes third indication information, and the third indication information indicates the geographical coverage area. For example, the geographical coverage area of the target beam may be a beam position of the target beam, physical location information of a beam coverage area of the target beam, or the like.

It should be noted that in this embodiment of this application, the beam indication information may be implemented in at least one of the foregoing implementations based on content indicated by the beam indication information. This is not limited in this application.

Optionally, in Implementation 1, when the coverage information of the target beam includes the coverage time of the target beam, the at least one piece of indication information may further include fourth indication information. The fourth indication information indicates a coverage duration of the target beam. In this way, the terminal device can more accurately determine the coverage time of the target beam through the beam indication information.

Similarly, in Implementation 2, when the coverage information of the target beam includes the frequency-domain resource of the target beam, the at least one piece of indication information may further include fifth indication information. The fifth indication information indicates a width of the frequency-domain resource of the target beam. In this way, the terminal device can more accurately determine a position of the frequency-domain resource of the target beam through the beam indication information.

In this embodiment of this application, to clearly indicate a receiving object of the beam indication information, in addition to including the indication information in the foregoing implementations, the beam indication information may further indicate the receiving object in the following manners:
Manner A1: The beam indication information further includes an indication of a first terminal device group. The indication of the first terminal device group identifies that the beam indication information is configured for a terminal device in the first terminal device group. Based on this, in this embodiment, a terminal device that receives the beam indication information and performs subsequent S302 belongs to the first terminal device group.

For example, the indication of the first terminal device group may be a group identifier of the first terminal device group.

Manner A2: The beam indication information further includes an identifier of a target terminal device. In this case, the beam indication information is configured for the target terminal device. Based on this, in this embodiment of this application, a terminal device that receives the beam indication information and performs subsequent S302 is the target terminal device.

Based on the descriptions of the beam indication information in this implementation, the beam indication information may be implemented in, but not limited to, the following two manners:
Manner B1: The at least one piece of indication information included in the beam indication information is at least one indication sequence.

Optionally, in Manner B1, the network device and the terminal device may maintain a correspondence between a plurality of indication sequences and indication content. In this way, the network device may send the indication sequence based on specific indication content, and the terminal device may also determine the specific indication content based on the received indication sequence.

For example, the coverage information of the target beam includes the coverage time of the target beam, and the beam indication information includes the first indication information indicating the second offset (that is, an offset between the coverage start time of the target beam and the first reference time). A correspondence that is between the indication sequence and a time offset and that is maintained by the network device and the terminal device may be shown in Table 1.

**Table 1**

| Indication sequence | Time offset |
|---|---|
| Indication sequence 1 | Time offset 1 |
| Indication sequence 2 | Time offset 2 |
| ... | ... |
| Indication sequence n | Time offset n |

The correspondence between the plurality of indication sequences and the indication content may be preset, for example, specified in a communication protocol, or may be configured by the network device for the terminal device through a message. This is not limited in this application.

It should be further noted that, to avoid interference among the plurality of indication sequences when the beam indication information includes the plurality of indication sequences, in the correspondence, different indication sequences indicating different indication content are mutually orthogonal. Based on this, when a quantity of the at least one indication sequence included in the beam indication information is greater than one, the at least one indication sequence is mutually orthogonal.

Further, a plurality of indication sequences indicating same indication content in the foregoing correspondence may be mutually orthogonal. For example, it is assumed that eight mutually orthogonal sequences are defined, sequences numbered from 1 to 4 indicate the second offset (that is, a time offset), and sequences numbered from 5 to 8 indicate the third offset (that is, a frequency-domain offset).

In Manner B1, when performing dynamic beam scheduling, the network device may notify the terminal device of the coverage information of the target beam by using the indication sequence. The terminal device may quickly determine the coverage information of the target beam through indication sequence detection. The network device can quickly perform beam configuration for the terminal device without configuring the coverage information of the target beam for the terminal device through higher-layer signaling. Therefore, this manner can meet a requirement of a high-dynamic beam configuration.

Manner B2: The beam indication information is carried in DCI, and the at least one piece of indication information included in the beam indication information is at least one indication field in the DCI.

Optionally, in Manner B2, the network device and the terminal device may alternatively maintain a plurality of pieces of predefined indication content (for example, an indication content value list). In this way, the network device may determine an indication field in the DCI based on specific indication content, and then generate the DCI; and the terminal device may determine the specific indication content based on the indication field in the received DCI. Optionally, the indication field may indicate a value corresponding to the indication content, or may indicate an index of the indication content in the indication content value list, or the like. Alternatively, the network device and the terminal device maintain a correspondence between a plurality of predefined indication fields and the indication content.

The plurality of pieces of predefined indication content may be preset, for example, specified in a communication protocol, or may be configured by the network device for the terminal device through a message. This is not limited in this embodiment of this application.

For example, assuming that the coverage information that is of the target beam and that is indicated by the beam indication information includes the coverage time of the target beam and the frequency-domain resource of the target beam, the DCI may include the following fields:
(1) Time offset (Time_Offset) field: indicating an offset (namely, the second offset) between the coverage start time of the target beam and the first reference time. The time offset (Time_Offset) field is the first indication information in the beam indication information. A length of the time offset (Time_Offset) field may be denoted as X bits (bit).
(2) Frequency-domain offset (Frequency_Offset) field: indicating an offset (namely, the third offset) between the start position of the frequency-domain resource of the target beam and the start position of the first reference frequency-domain resource. The frequency-domain offset (Frequency_Offset) field is the second indication information in the beam indication information. A length of the frequency-domain offset (Frequency_Offset) field may be denoted as Y bits.
(3) Duration (Duration) field: indicating a coverage duration of the target beam. The duration (Duration) field is the fourth indication information in the beam indication information. A length of the duration (Duration) field may be denoted as Z bits.

Optionally, in Manner B2, a time-frequency resource position of the DCI may be in the common search space. In other words, the network device may send the DCI in the common search space. In this way, the terminal device may search for the DCI in the common search space.

In some scenarios, configuration information of the common search space may be configured by the network device for the terminal device through higher-layer signaling.

In some other scenarios, a configuration of the common search space may be predefined, for example, specified in a communication protocol, or the common search space is associated with the synchronization signal block. When the common search space is associated with the synchronization signal block, after receiving the synchronization signal block, the terminal device may determine the common search space, and may search the common search space for the DCI carrying the beam indication information. For example, the synchronization signal block may be associated with the common search space in at least one of the following:
(I) An offset between a time-frequency resource position of the common search space and the time-frequency resource position of the synchronization signal block is a fourth offset.
   Optionally, the fourth offset may be preset, for example, specified in a communication protocol. Optionally, the fourth offset may be carried in the synchronization signal block or the system message, so that the network device may notify the fourth offset to a terminal device within a coverage area.
(II) A period of the common search space is the same as a revisit period of a synchronization signal block beam.

In Manner B2, the DCI carrying the beam indication information may be scrambled (for example, cyclic redundancy check (cyclic redundancy check, CRC) scrambling) in the following manner, so that a specific terminal device can parse the DCI.

Manner C1: The DCI is scrambled by using a radio network temporary identifier (radio network temporary indentifier, RNTI) of the first terminal device group. In this case, the DCI is sent for the first terminal device group. Based on this, in this embodiment, a terminal device that receives the beam indication information and performs subsequent S302 belongs to the first terminal device group.

In Manner C1, the DCI is scrambled by using the RNTI of the first terminal device group, indicating that the DCI is configured for the terminal device in the first terminal device group, and the terminal device in the first terminal device group can accurately parse the DCI. Therefore, in Manner C1, the DCI sent by the network device may be at a terminal device group level. To be specific, the network device may configure the coverage information of the target beam for the terminal device at a granularity of a group.

Manner C2: The DCI is scrambled by using a cell-radio network temporary identifier (cell-radio network temporary indentifier, C-RNTI) of the target terminal device. In this case, the DCI is sent for the target terminal device. Based on this, in this embodiment of this application, a terminal device that receives the beam indication information and performs subsequent S302 is the target terminal device.

In Manner C2, the DCI is scrambled by using the C-RNTI of the target terminal device, indicating that the DCI is configured for the target terminal device, and only the target terminal device in a connected state can accurately parse the DCI. Therefore, in Manner C2, the DCI sent by the network device may be at a terminal device level. To be specific, the network device may configure the coverage information of the target beam for the terminal device at a granularity of a single terminal device.

Manner C3: The DCI is scrambled by using a common RNTI.

In Manner C3, all terminal devices having the common RNTI can parse the DCI.

It should be noted that a type, a format, and the like of the DCI are not limited in Manner B2. Optionally, the DCI may be different from conventional DCI, and is dedicated small-size DCI for configuring the coverage information of the target beam. In some scenarios, the DCI may be conventional DCI, and the network device may send the DCI by using a service beam. In this case, the DCI may further include a control field, and the control field may indicate control information for resource scheduling. For example, the control field in the DCI may indicate control information of a physical downlink shared channel (physical downlink shared channel, PDSCH). That is, the control field may be used to schedule a PDSCH for the terminal device, so that the terminal device can transmit service data through the PDSCH.

In Manner B2, when performing dynamic beam scheduling, the network device may notify the terminal device of the coverage information of the target beam by using the DCI. The terminal device may quickly determine the coverage information of the target beam by detecting the DCI. The network device can quickly perform beam configuration for the terminal device without configuring the coverage information of the target beam for the terminal device through higher-layer signaling. Therefore, this manner can meet a requirement of a high-dynamic beam configuration.

It should be further noted that in S301, the network device may determine the coverage information of the target beam according to a high-dynamic service requirement such as service distribution, sudden interference, and a burst service within a coverage area of the network device or with reference to a factor such as a current beam sweeping pattern of the network device, to determine and generate the beam indication information, thereby indicating the coverage information of the target beam to a terminal device within a coverage area by transmitting the beam indication information.

S302: The terminal device transmits a signal based on the coverage information of the target beam of the network device.

When the coverage information of the target beam includes the coverage time of the target beam, the terminal device may transmit the signal within the coverage time of the target beam. Optionally, before the coverage time of the target beam begins, the terminal device may enter a low-power state. For example, the terminal device may turn off a radio frequency module, switch to a sleep state, or the like.

When the coverage information of the target beam includes the frequency-domain resource of the target beam, the terminal device may transmit the signal by using the frequency-domain resource of the target beam.

When the coverage information of the target beam includes the geographical coverage area of the target beam, a terminal device within the geographical coverage area may transmit a signal based on the coverage time and/or the frequency-domain resource of the target beam.

It should be further noted that a type of the target beam is not limited in this embodiment of this application. The target beam may include but is not limited to at least one of the following: a service beam, a synchronization signal block beam, and an RO beam. The service beam may include an uplink service beam and/or a downlink service beam. In this way, the network device may separately perform beam configuration for service beams in uplink and downlink directions. Signals transmitted by the terminal device when performing S302 vary based on different types of the target beam. For example, when the target beam is the uplink service beam, the terminal device may send uplink service data in S302; or when the target beam is the downlink service beam, the terminal device may receive downlink service data in S302. Optionally, the terminal device may further receive the DCI within the coverage time of the target beam, and send the uplink service data or receive the downlink service data based on a granted resource indicated by the DCI. When the target beam is the synchronization signal block beam, the terminal device may receive the synchronization signal block in S302. When the target beam is the RO beam, the terminal device may initiate a random access procedure in S302, to receive and send a message related to random access.

In conclusion, this embodiment of this application provides the communication method. In the method, the network device may perform beam configuration for the terminal device by sending the beam indication information, and the terminal device may determine, through the beam indication information, the at least one piece of coverage information of the target beam, for example, the coverage time, the frequency-domain resource, or the geographical coverage area, thereby adjusting a local operation and transmitting a signal based on the coverage information of the target beam. According to the method, the network device does not need to configure the coverage information of the target beam for the terminal device through higher-layer signaling. Instead, the network device quickly performs beam configuration for the terminal device through the beam indication information. Therefore, this manner can improve efficiency of beam configuration for the terminal device and meet a requirement of a high-dynamic beam configuration.

Embodiment 2: An embodiment of this application provides a communication method. The following describes the method with reference to a flowchart shown in FIG. 6.

S601: A network device sends first information. A terminal device receives the first information from the network device. The first information indicates a plurality of candidate beam sweeping patterns of a target beam of the network device.

Any candidate beam sweeping pattern of the target beam specifies a sweeping rule such as a coverage order and/or a coverage time of a target beam at a different beam position within a beam sweeping period.

Optionally, the network device may send the first information through higher-layer signaling (for example, RRC signaling).

S602: The network device sends second information. The terminal device receives the second information from the network device. The second information indicates a first beam sweeping pattern, and the first beam sweeping pattern is one of the plurality of candidate beam sweeping patterns.

In an implementation, there is an association relationship between a time-frequency resource of the second information and a time-frequency resource of a synchronization signal block. In this way, the terminal device may determine the time-frequency resource of the second information based on the time-frequency resource of the synchronization signal block, thereby improving efficiency of receiving the second information.

In this implementation, the network device may further send the synchronization signal block through S602a. An offset between a time-frequency resource position of the synchronization signal block and a time-frequency resource position of the second information is a first offset. For example, an offset between a time-frequency resource start position of the synchronization signal block and a time-frequency resource start position of the second information is the first offset. After receiving the synchronization signal block from the network device in S602a, the terminal device may determine the time-frequency resource position of the second information based on the time-frequency resource position of the synchronization signal block and the first offset.

Optionally, the first offset may be preset, for example, specified in a communication protocol. Optionally, the first offset may alternatively be configured by the network device for the terminal device through a message. For example, the first offset may be carried in the synchronization signal block or a system message, so that the network device may notify the first offset to a terminal device within a coverage area.

In an implementation, the second information may include at least one piece of indication information. First indication information included in the at least one piece of indication information may directly or indirectly indicate the first beam sweeping pattern. Optionally, when the second information further includes other indication information, the other indication information may indicate other related content of the first beam sweeping pattern.

Based on a specific form in which the first indication information in the second information indicates the first beam sweeping pattern, this application provides the following two implementations:

In a first implementation, the first indication information may directly indicate the first beam sweeping pattern in, but not limited to, at least one of the following manners:
Manner D1: The first indication information may include an index of the first beam sweeping pattern.
Manner D2: The first indication information may include a pattern indication sequence. The pattern indication sequence indicates a coverage order and/or a coverage time that are/is of the target beam for different beam positions and that is indicated by the first beam sweeping pattern.

For example, it is assumed that the target beam of the network device includes six beam positions, and the pattern indication sequence is 00 01 11 10 00 10. In the pattern indication sequence, each two adjacent bits may indicate one beam position of a target beam, whether values of each two bits are 0 may indicate whether the beam position is covered by the target beam, and specific values of each two bits may indicate a coverage time of the target beam at the beam position. Based on this, a meaning of the pattern indication sequence is that a coverage order of the target beams is: a beam position 2 → a beam position 3 → a beam position 4 → a beam position 6, and coverage times of beams at these beam positions are respectively a coverage time 1, a coverage time 3, a coverage time 2, and a coverage time 2. Optionally, a specific value of each coverage time may be predefined. In addition, a correspondence between values of consecutive bits indicating one beam position in the pattern indication sequence and a coverage time may also be predefined.

Optionally, in this implementation, the at least one piece of indication information may further include second indication information or third indication information.

The second indication information may directly or indirectly indicate a start time of a beam sweeping period of the target beam. For example, the second indication information indicates a second offset, and the second offset includes an offset between the start time of the beam sweeping period and a first reference time. For example, the first reference time may be, but is not limited to, a time-domain resource start time of the synchronization signal block or a time-domain resource start time of the second information.

The third indication information may indicate a validity period (namely, an execution length) of the first beam sweeping pattern. The validity period is usually greater than or equal to a duration of one beam sweeping period. In this way, the terminal device may perform signal transmission based on the first beam sweeping pattern within the validity period.

Optionally, in this implementation, the at least one piece of indication information may further include fourth indication information. The fourth indication information indicates a duration of a beam sweeping period.

In a second implementation, the first indication information indicates a first search space, and the first search space corresponds to the first beam sweeping pattern. In this way, the first indication information may indirectly indicate the first beam sweeping pattern. Based on this, the terminal device may determine and use the first beam sweeping pattern while determining and using the first search space based on the first indication information. In this implementation, the network device may implicitly indicate, by indicating the terminal device to use the first search space, the terminal device to determine and use the first beam sweeping pattern of the target beam.

Optionally, a correspondence between the first search space and the first beam sweeping pattern may be preset, for example, specified in a communication protocol. Alternatively, the correspondence between the first search space and the first beam sweeping pattern is configured by the network device for the terminal device. For example, the network device may include configuration information of the correspondence in the synchronization signal block or a system message.

For example, the first indication information may be an index of the first search space.

In addition, in this implementation, the first search space may be a common search space or a dedicated search space. This is not limited in this embodiment of this application.

Optionally, in this implementation, the at least one piece of indication information may further include at least one of the second indication information, the third indication information, or the fourth indication information. For details, refer to descriptions in the first implementation. Details are not described herein again.

In this embodiment of this application, to clearly indicate a receiving object of the second information, in addition to including the indication information in the foregoing several implementations, the second information may further indicate the receiving object in the following manners:
Manner E1: The second information further includes an indication of a first terminal device group. The indication of the first terminal device group identifies that the second information is configured for a terminal device in the first terminal device group. Based on this, in this embodiment, a terminal device that receives the second information and uses the first beam sweeping pattern belongs to the first terminal device group.

For example, the indication of the first terminal device group may be a group identifier of the first terminal device group.

Manner E2: The second information further includes an identifier of a target terminal device. In this case, the second information is configured for the target terminal device. Based on this, in this embodiment of this application, a terminal device that receives the second information and uses the first beam sweeping pattern is the target terminal device.

Based on the descriptions of the second information in this implementation, similar to the beam indication information in Embodiment 1, the second information may also be implemented in, but not limited to, the following two manners:
Manner F1: The at least one piece of indication information included in the second information is at least one indication sequence.

Optionally, to avoid interference among the plurality of indication sequences when a quantity of the at least one indication sequence included in the second information is greater than one, the at least one indication sequence is mutually orthogonal.

Optionally, in Manner F1, the network device and the terminal device may maintain a correspondence between a plurality of indication sequences and indication content. In this way, the network device may send the indication sequence based on specific indication content, and the terminal device may also determine the specific indication content based on the received indication sequence. Optionally, the correspondence may be preset, for example, specified in a communication protocol, or may be configured by the network device for the terminal device through a message. This is not limited in this application.

For example, the indication sequence in the second information may include: an indication sequence indicating the first beam sweeping pattern (for example, an index of the first beam sweeping pattern, or an indication sequence used to determine an index of the first beam sweeping pattern); an indication sequence indicating a sweeping rule of the first beam sweeping pattern (for example, the pattern indication sequence in the first implementation, or an indication sequence used to determine the pattern indication sequence); an indication sequence indicating an offset (namely, the second offset) between a start time of a beam sweeping period of the first beam sweeping pattern and the first reference time; an indication sequence indicating the validity period of the first beam sweeping pattern; and the like.

For another example, in the second implementation, the indication sequence in the second information is an indication sequence indicating the first search space. For example, the indication sequence in the second information is an index of the first search space, or an indication sequence used to determine the index of the first search space.

In Manner F1, when the network device needs to use the first beam sweeping pattern of the target beam, the network device may notify, by using the indication sequence, the terminal device to determine and use the first beam sweeping pattern of the target beam. The terminal device may quickly determine, through indication sequence detection, the to-be-used first beam sweeping pattern of the target beam. The network device can quickly configure a beam sweeping pattern for the terminal device without configuring the to-be-used beam sweeping pattern for the terminal device through higher-layer signaling. Therefore, this manner can meet a requirement of a high-dynamic beam configuration.

Manner F2: The second information is carried in DCI, and the at least one piece of indication information included in the second information is at least one indication field in the DCI.

Manner D2 (that is, the second information includes the pattern indication sequence) in the first implementation is used as an example. The DCI carrying the second information may include the following indication fields:
(1) Time offset (Time_Offset) field of the beam sweeping period: indicating an offset (namely, the second offset) between the start time of the beam sweeping period of the first beam sweeping pattern and the first reference time. A length of the time offset (Time_Offset) field of the beam sweeping period may be denoted as P bits.
(2) Pattern (Pattern) field: a value of the pattern field is a pattern indication sequence of the first beam sweeping pattern and indicates a sweeping rule of the first beam sweeping pattern. For example, the value of the pattern field may be 00 01 11 10 00 10. For specific indication content of the pattern field, refer to the descriptions in the example of the pattern indication sequence in Manner D2. Details are not described herein again. A length of the pattern (Pattern) field may be denoted as Q bits.
(3) Validity period (Period) field: used for a validity period of the first beam sweeping pattern. A length of the validity period (Period) field may be K bits.

The second implementation is still used as an example. In some implementation scenarios, the DCI carrying the second information may include the following indication field: a search space configuration index (SS_config_index) field, indicating a to-be-used search space (namely, the first search space corresponding to the first beam sweeping pattern). In some other implementation scenarios, the DCI carrying the second information may include the following indication fields:
(1) Common search space configuration index (CSS_config_index) field: when a value of the field is not 0, a value (namely, an index of a CSS) of a bit sequence in the field indicates a to-be-used common search space (that is, the first search space corresponding to the first beam sweeping pattern is the common search space).
(2) Dedicated search space configuration index (USS_config_index) field: when a value of the field is not 0, a value of a bit sequence (namely, an index of a USS) in the field indicates a to-be-used dedicated search space (that is, the first search space corresponding to the first beam sweeping pattern is the dedicated search space).

Optionally, in Manner F2, the DCI carrying the second information may be scrambled (for example, CRC scrambling) in the following manner, so that a specific terminal device can parse the DCI.

Manner G1: The DCI is scrambled by using an RNTI of the first terminal device group. In this case, the DCI is sent for the first terminal device group. Based on this, in this embodiment, a terminal device that receives the second information and uses the first beam sweeping pattern belongs to the first terminal device group.

In Manner G1, the DCI is scrambled by using the RNTI of the first terminal device group, indicating that the DCI is configured for the terminal device in the first terminal device group, and the terminal device in the first terminal device group can accurately parse the DCI. Therefore, in Manner G1, the DCI sent by the network device may be at a terminal device group level. To be specific, the network device may configure a to-be-used beam sweeping pattern of the target beam for the terminal device at a granularity of a group.

Manner G2: The DCI is scrambled by using a C-RNTI of the target terminal device. In this case, the DCI is sent for the target terminal device. Based on this, in this embodiment of this application, a terminal device that receives the second information and uses the first beam sweeping pattern is the target terminal device.

In Manner G2, the DCI is scrambled by using the C-RNTI of the target terminal device, indicating that the DCI is configured for the target terminal device, and only the target terminal device in a connected state can accurately parse the DCI. Therefore, in Manner G2, the DCI sent by the network device may be at a terminal device level. To be specific, the network device may configure a to-be-used beam sweeping pattern of the target beam for the terminal device at a granularity of a single terminal device.

Manner G3: The DCI is scrambled by using a common RNTI.

In Manner G3, all terminal devices having the common RNTI can parse the DCI.

It should be noted that a type, a format, and the like of the DCI are not limited in Manner F2. Optionally, the DCI may be different from conventional DCI, and is dedicated small-size DCI for using the beam sweeping pattern of the target beam. In some scenarios, the DCI may be conventional DCI, and the network device may send the DCI by using a service beam. In this case, the DCI may further include a control field, and the control field may indicate control information for resource scheduling. For example, a control field in the DCI may indicate control information of a PDSCH.

In Manner F2, when the network device needs to use the first beam sweeping pattern of the target beam, the network device may notify, by using the DCI, the terminal device to determine and use the first beam sweeping pattern of the target beam. The terminal device may quickly determine, by detecting the DCI, the to-be-used first beam sweeping pattern of the target beam. The network device can quickly configure a beam sweeping pattern for the terminal device without configuring the to-be-used beam sweeping pattern for the terminal device through higher-layer signaling. Therefore, this manner can meet a requirement of a high-dynamic beam configuration.

It should be further noted that in S602, the network device may determine to use or switch to the first beam sweeping pattern of the target beam, according to a high-dynamic service requirement such as service distribution, sudden interference, and a burst service within a coverage area of the network device or with reference to a factor such as air-interface signal quality, to generate the second information, thereby indicating, to a terminal device within a coverage area by transmitting the second information, the to-be-used first beam sweeping pattern of the target beam.

S603: The network device and the terminal device transmit a signal based on the first beam sweeping pattern.

In S603, the terminal device may determine the first beam sweeping pattern of the target beam based on the received second information, then determine, based on the first beam sweeping pattern, a coverage time (a revisit time) of the target beam for a beam position in which the terminal device is located, and then transmit a corresponding signal within the coverage time. In S603, the network device may separately cover a plurality of beam positions based on the first beam sweeping pattern by using the target beam, and transmit a corresponding signal within a coverage time for each beam position.

Similar to Embodiment 1, a type of the target beam is not limited in this embodiment of this application. The target beam may include but is not limited to at least one of the following: a service beam, a synchronization signal block beam, and an RO beam. The service beam may include an uplink service beam and/or a downlink service beam. In this way, the network device may separately configure beam sweeping patterns for service beams in uplink and downlink directions. Signals transmitted by the terminal device within the coverage time of the target beam vary based on different types of the target beam. For example, when the target beam is the uplink service beam, the terminal device may send uplink service data within the coverage time of the target beam; or when the target beam is the downlink service beam, the terminal device may receive downlink service data within the coverage time of the target beam. Optionally, the terminal device may further receive the DCI within the coverage time of the target beam, and send the uplink service data or receive the downlink service data based on a granted resource indicated by the DCI. When the target beam is the synchronization signal block beam, the terminal device may receive a synchronization signal block within the coverage time of the target beam. When the target beam is the RO beam, the terminal device may initiate a random access procedure within the coverage time of the target beam, to receive and send a message related to random access.

In conclusion, this embodiment of this application provides the communication method. In the method, the network device may first configure a plurality of candidate beam sweeping patterns of the target beam for the terminal device by using the first information, and then when a candidate beam sweeping pattern needs to be used, notify, by using the second information, the terminal device to determine and use the candidate beam sweeping pattern. In this way, when a beam sweeping pattern needs to be switched to or needs to be used, the network device quickly and flexibly indicates the terminal device to use the beam sweeping pattern. In addition, the network device does not need to indicate, through higher-layer signaling, the terminal device to use the beam sweeping pattern of the target beam. Instead, the network device quickly performs beam configuration for the terminal device by using the second information (for example, the indication sequence or the DCI). Therefore, this manner can improve efficiency of beam configuration for the terminal device and meet a requirement of a high-dynamic beam configuration.

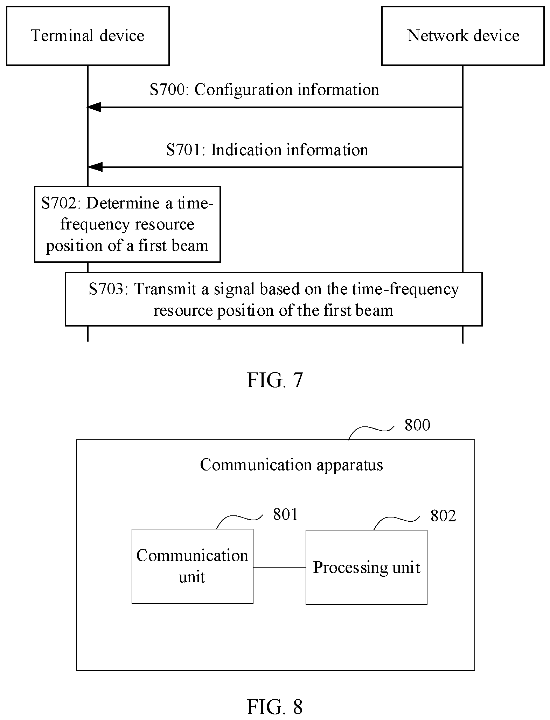

Embodiment 3: An embodiment of this application provides a communication method. The following describes the method with reference to a flowchart shown in FIG. 7.

S701: A network device sends indication information. A terminal device receives the indication information from the network device. The indication information indicates a first beam, and the first beam is a beam at one beam position in beams at a plurality of beam positions indicated by a first beam sweeping pattern.

Optionally, before S701, the network device may further send configuration information through S700. The configuration information indicates the first beam sweeping pattern, thereby configuring the first beam sweeping pattern for the terminal device. The first beam sweeping pattern is a beam sweeping rule of the network device. In other words, the first beam sweeping pattern may indicate information such as a coverage order and/or a coverage time of beams at a plurality of beam positions. The terminal device receives the configuration information from the network device through S700, to determine the first beam sweeping pattern. Optionally, the configuration information may be higher-layer signaling, for example, RRC signaling.

In an implementation, the indication information includes first information of the first beam. The first information indicates a geographical coverage area of the first beam or an index of the first beam. For example, the geographical coverage area of the first beam may be a beam position of the first beam, physical location information of a beam coverage area of the first beam, or the like.

In this embodiment of this application, to clearly indicate a receiving object of the indication information, in addition to including the first information of the first beam, the indication information may further indicate the receiving object in the following manners:
Manner J1: The indication information further includes an indication of a first terminal device group. The indication of the first terminal device group identifies that the beam indication information is configured for a terminal device in the first terminal device group. Based on this, in this embodiment, a terminal device that receives the indication information and performs a subsequent step belongs to the first terminal device group.

For example, the indication of the first terminal device group may be a group identifier of the first terminal device group.

Manner J2: The indication information further includes an identifier of a target terminal device. In this case, the indication information is configured for the target terminal device. Based on this, in this embodiment, a terminal device that receives the indication information and performs a subsequent step is the target terminal device.

Optionally, in this embodiment of this application, the indication may be implemented in, but not limited to, the following two manners:
Manner H1: The first information included in the indication information is an indication sequence.

Optionally, in this manner, the network device and the terminal device may maintain a correspondence between a plurality of indication sequences and a geographical coverage area of a beam/an index of a beam. In this way, the network device may send the indication sequence based on the geographical coverage area/index of the first beam, and the terminal device may also determine the geographical coverage area/index of the first beam based on the received indication sequence, to determine the first beam.

The correspondence may be preset, for example, specified in a communication protocol, or configured by the network device for the terminal device through a message. This is not limited in this embodiment of this application.

Manner H2: The indication information is carried in DCI, and the first information is an indication field in the DCI.

Optionally, in this manner, the network device and the terminal device may also maintain geographical coverage areas/indexes of a plurality of predefined beams. In this way, the network device may determine the indication field in the DCI based on the geographical coverage area/index of the first beam, to generate the DCI; and the terminal device may also determine the geographical coverage area/index of the first beam based on the indication field in the received DCI, to determine the first beam.

Geographical coverage areas/indexes of the plurality of predefined beams may be preset, for example, specified in a communication protocol, or may be configured by the network device for the terminal device through a message. This is not limited in this embodiment of this application.

In Manner H2, the DCI carrying the indication may be scrambled (for example, CRC scrambling) in the following manner, so that a specific terminal device can parse the DCI.

Manner I1: The DCI is scrambled by using an RNTI of the first terminal device group. In this case, the DCI is sent for the first terminal device group. Based on this, in this embodiment, a terminal device that receives the indication information and performs a subsequent step belongs to the first terminal device group.

In Manner I1, the DCI is scrambled by using the RNTI of the first terminal device group, indicating that the DCI is configured for the terminal device in the first terminal device group, and the terminal device in the first terminal device group can accurately parse the DCI. Therefore, the DCI sent by the network device may be at a terminal device group level. To be specific, the network device may perform beam configuration for the terminal device at a granularity of a group.

Manner I2: The DCI is scrambled by using a C-RNTI of the target terminal device. In this case, the DCI is sent for the target terminal device. Based on this, in this embodiment, a terminal device that receives the indication information and performs a subsequent step is the target terminal device.

In Manner I2, the DCI is scrambled by using the C-RNTI of the target terminal device, indicating that the DCI is configured for the target terminal device, and only the target terminal device in a connected state can accurately parse the DCI. Therefore, the DCI sent by the network device may be at a terminal device level. To be specific, the network device may perform beam configuration for the terminal device at a granularity of a single terminal device.

Manner I3: The DCI is scrambled by using a common RNTI. In Manner I3, all terminal devices having the common RNTI can parse the DCI.

It should be noted that a type, a format, and the like of the DCI are not limited in Manner H2. Optionally, the DCI may be different from conventional DCI, and is dedicated small-size DCI for configuring the coverage information of the target beam. In some scenarios, the DCI may be conventional DCI, and the network device may send the DCI by using a service beam. In this case, the DCI may further include a control field, and the control field may indicate control information for resource scheduling. For example, the control field in the DCI may indicate control information of a physical downlink shared channel (physical downlink shared channel, PDSCH). That is, the control field may be used to schedule a PDSCH for the terminal device, so that the terminal device can transmit service data through the PDSCH.

In Manner H1 or Manner H2, the network device may notify the terminal device of a time-frequency resource position of the first beam by using the indication sequence or the DCI, so that the terminal device can learn of coverage information of the first beam as soon as possible, and may transmit a signal based on the time-frequency resource position of the first beam by adjusting a local configuration. The network device does not need to notify the terminal device of the time-frequency resource position of the first beam through higher-layer signaling. Therefore, the two manners can meet a requirement of a high-dynamic beam configuration.

S702: The terminal device determines the time-frequency resource position of the first beam based on a time-frequency resource position of the indication information and a first offset. The first offset is an offset between the time-frequency resource position of the indication information and the time-frequency resource position of the first beam.

In other words, the offset between the time-frequency resource position of the first beam and the time-frequency resource position of the indication information is the first offset. To be specific, after determining the time-frequency resource position of the first beam, the network device may determine the time-frequency resource position of the indication information based on the time-frequency resource position of the first beam, and send the indication information at the time-frequency resource position of the indication information, so that the terminal device can determine the time-frequency resource position of the first beam through S702. In this way, the network device may indirectly notify the terminal device of the time-frequency resource position of the first beam by sending the indication information.

For example, the first offset is an offset between a time-frequency resource start position of the indication information and a time-frequency resource start position of the first beam.

Optionally, the first offset may be preset, for example, specified in a communication protocol. Alternatively, the first offset is configured by the network device for the terminal device through a message. For example, the first offset may be carried in a synchronization signal block or a system message.

S703: The network device transmits a signal by using the first beam. The terminal device may transmit a signal based on the time-frequency resource position of the first beam.

For example, the terminal device may transmit a signal within a coverage time of the first beam by using a frequency-domain resource of the first beam.

It should be further noted that a type of the first beam is not limited in this embodiment of this application. The first beam may include but is not limited to at least one of the following: a service beam, a synchronization signal block beam, and an RO beam. Signals transmitted by the terminal device in S703 vary based on different types of the first beam. For details, refer to the descriptions in Embodiment 1. Details are not described herein again.

In conclusion, this embodiment of this application provides the communication method. In the method, the network device may notify the terminal device through the indication information before the first beam covers/revisits a beam position of the first beam. In this way, the terminal device may accurately determine the time-frequency resource position of the first beam based on the time-frequency resource position of the indication information, so that a local operation may be adjusted based on the time-frequency resource position of the first beam to transmit a signal. According to the method, the network device does not need to perform beam configuration for the terminal device through higher-layer signaling. Instead, the network device quickly performs beam configuration for the terminal device through the indication information. Therefore, this manner can improve efficiency of beam configuration for the terminal device and meet a requirement of a high-dynamic beam configuration.

It should be further noted that each step in the foregoing embodiments or instances may be performed by a corresponding device, or may be performed by a component such as a module, a chip, a processor, or a chip system in the device. This is not limited in embodiments of this application. The foregoing embodiments are described only by using an example in which steps are executed by corresponding devices. In addition, specific implementations or examples in the foregoing embodiments constitute no limitation on the solutions provided in embodiments of this application.

It should be noted that in the foregoing embodiments, some steps may be selected for implementation, or an order of steps in the figure may be adjusted for implementation. This is not limited in this application. It should be understood that performing some steps in the figure, adjusting an order of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

It may be understood that the network architecture and the application scenario described in embodiments of this application are intended to describe the technical solutions in embodiments of the present invention more clearly, but do not constitute a limitation on the technical solutions provided in embodiments of the present invention. A person of ordinary skill in the art may be aware that, with evolution of the network architecture and emergence of a new service, the technical solutions provided in embodiments of the present invention are also applicable to a similar technical problem.

It should be noted that the "step" in embodiments of this application is merely an example, is a representation method used to better understand embodiments, and does not constitute a substantive limitation on execution of the solutions in this application. For example, the "step" may also be understood as a "feature". In addition, the step does not constitute any limitation on an execution order of the solutions in this application, and a new technical solution formed through an operation, for example, step order change, step combination, or step splitting, performed on this basis without affecting implementation of the overall solutions also falls within the scope disclosed in this application.

Based on a same technical concept, this application further provides a communication apparatus. The communication apparatus may be applied to the communication system shown in FIG. 2A to FIG. 2D. The communication apparatus is configured to implement the methods provided in the foregoing embodiments. The communication apparatus may be applied to the terminal device or the network device in the foregoing embodiments. Refer to FIG. 8. The communication apparatus 800 includes a communication unit 801 and a processing unit 802.

The communication unit 801 is configured to: receive and send data, and support the communication apparatus 800 in communicating with another device.

The processing unit 802 is configured to control and manage an action of the communication apparatus 800, and perform steps performed by the network device or the terminal device in the communication methods provided in the foregoing embodiments or instances.

Optionally, the communication apparatus 800 further includes a storage unit, configured to store program code and/or data of the communication apparatus 800.

The communication unit 801 may be referred to as an input/output unit, a transceiver unit, or the like. The communication unit 801 may be a transceiver and a communication interface. The processing unit 802 may be a processor. When the communication apparatus 800 is a module (for example, a chip) in a communication device, the communication unit 801 may be an input/output interface, an input/output circuit, an input/output pin, or the like, and may also be referred to as an interface, a communication interface, an interface circuit, or the like; and the processing unit 802 may be a processor, a processing circuit, a logic circuit, or the like.

In an implementation, the communication apparatus 800 may be applied to the terminal device in Embodiment 1 shown in FIG. 3. The processing unit 802 is configured to:
receive beam indication information from a network device by using the communication unit 801, where the beam indication information indicates coverage information of a target beam of the network device, and the coverage information of the target beam includes at least one of the following: a coverage time of the target beam, a frequency-domain resource of the target beam, or a geographical coverage area of the target beam; and
transmit a signal based on the coverage information of the target beam of the network device by using the communication unit 801.

Optionally, the processing unit 802 is further configured to:
receive a synchronization signal block from the network device by using the communication unit 801; and
determine a time-frequency resource position of the beam indication information based on a time-frequency resource position of the synchronization signal block and a first offset. The first offset is an offset between the time-frequency resource position of the synchronization signal block and the time-frequency resource position of the beam indication information.

Optionally, the first offset is preset; or the first offset is carried in the synchronization signal block or a system message.

Optionally, the target beam includes at least one of the following: a service beam, a synchronization signal block beam, and a random access channel occasion RO beam.

Optionally, the beam indication information includes at least one piece of indication information. When the coverage information of the target beam includes the coverage time of the target beam, the at least one piece of indication information includes first indication information, the first indication information indicates a second offset, and the second offset includes an offset between a coverage start time of the target beam and a first reference time. Alternatively, when the coverage information of the target beam includes the frequency-domain resource of the target beam, the at least one piece of indication information includes second indication information, the second indication information indicates a third offset, and the third offset includes an offset between a start position of the frequency-domain resource of the target beam and a start position of a first reference frequency-domain resource. Alternatively, when the coverage information of the target beam includes the geographical coverage area of the target beam, the at least one piece of indication information includes third indication information, and the third indication information indicates the geographical coverage area.

Optionally, the first reference time is a time-domain resource start time of the synchronization signal block or a time-domain resource start time of the beam indication information. The first reference frequency-domain resource is a frequency-domain resource of the synchronization signal block or a frequency-domain resource of the beam indication information.

Optionally, when the coverage information of the target beam includes the coverage time of the target beam, the at least one piece of indication information further includes fourth indication information, and the fourth indication information indicates a coverage duration of the target beam. Alternatively, when the coverage information of the target beam includes the frequency-domain resource of the target beam, the at least one piece of indication information further includes fifth indication information, and the fifth indication information indicates a width of the frequency-domain resource of the target beam.

Optionally, the beam indication information further includes an indication of a first terminal device group. The indication of the first terminal device group identifies that the beam indication information is configured for a terminal device in the first terminal device group, and the terminal device belongs to the first terminal device group. Alternatively, the beam indication information further includes an identifier of the terminal device.

Optionally, the at least one piece of indication information is at least one indication sequence. Alternatively, the beam indication information is carried in downlink control information DCI, and the at least one piece of indication information is at least one indication field in the DCI.

Optionally, a time-frequency resource position of the DCI is located in a common search space.

Optionally, an offset between a time-frequency resource position of the common search space and the time-frequency resource position of the synchronization signal block is a fourth offset; or a period of the common search space is the same as a revisit period of a synchronization signal block beam.

Optionally, the fourth offset is preset; or the fourth offset is carried in the synchronization signal block or the system message.

Optionally, the DCI is scrambled by using a radio network temporary identifier RNTI of the first terminal device group, and the terminal device belongs to the first terminal device group. Alternatively, the DCI is scrambled by using a cell radio network temporary identifier C-RNTI of the terminal device. Alternatively, the DCI is scrambled by using a common RNTI.

Optionally, the DCI further includes a control field, and the control field indicates control information for resource scheduling.

Optionally, when a quantity of the at least one indication sequence is greater than one, the at least one indication sequence is mutually orthogonal.

Optionally, when the coverage information of the target beam includes the coverage time of the target beam, the processing unit 802 is further configured to:
control the terminal device to enter a low-power state before the coverage time of the target beam begins.

In an implementation, the communication apparatus 800 may be applied to the network device in Embodiment 1 shown in FIG. 3. The processing unit 802 is configured to:
determine beam indication information; and
send the beam indication information by using the communication unit 801. The beam indication information indicates coverage information of a target beam of the network device, and the coverage information of the target beam includes at least one of the following: a coverage time of the target beam, a frequency-domain resource of the target beam, or a geographical coverage area of the target beam.

Optionally, the processing unit 802 is further configured to:
send a synchronization signal block by using the communication unit 801. An offset between a time-frequency resource position of the synchronization signal block and a time-frequency resource position of the beam indication information is a first offset.

Optionally, the first offset is preset; or the first offset is carried in the synchronization signal block or a system message.

Optionally, the target beam includes at least one of the following: a service beam, a synchronization signal block beam, and a random access channel occasion RO beam.

Optionally, the beam indication information includes at least one piece of indication information. When the coverage information of the target beam includes the coverage time of the target beam, the at least one piece of indication information includes first indication information, the first indication information indicates a second offset, and the second offset includes an offset between a coverage start time of the target beam and a first reference time. Alternatively, when the coverage information of the target beam includes the frequency-domain resource of the target beam, the at least one piece of indication information includes second indication information, the second indication information indicates a third offset, and the third offset includes an offset between a start position of the frequency-domain resource of the target beam and a start position of a first reference frequency-domain resource. Alternatively, when the coverage information of the target beam includes the geographical coverage area of the target beam, the at least one piece of indication information includes third indication information, and the third indication information indicates the geographical coverage area.

Optionally, the first reference time is a time-domain resource start time of the synchronization signal block or a time-domain resource start time of the beam indication information. The first reference frequency-domain resource is a frequency-domain resource of the synchronization signal block or a frequency-domain resource of the beam indication information.

Optionally, when the coverage information of the target beam includes the coverage time of the target beam, the at least one piece of indication information further includes fourth indication information, and the fourth indication information indicates a coverage duration of the target beam. Alternatively, when the coverage information of the target beam includes the frequency-domain resource of the target beam, the at least one piece of indication information further includes fifth indication information, and the fifth indication information indicates a width of the frequency-domain resource of the target beam.

Optionally, the beam indication information further includes an indication of a first terminal device group. The indication of the first terminal device group identifies that the beam indication information is configured for a terminal device in the first terminal device group. Alternatively, the beam indication information further includes an identifier of a target terminal device.

Optionally, the at least one piece of indication information is at least one indication sequence. Alternatively, the beam indication information is carried in downlink control information DCI, and the at least one piece of indication information is at least one indication field in the DCI.

Optionally, a time-frequency resource position of the DCI is located in a common search space.

Optionally, an offset between a time-frequency resource position of the common search space and the time-frequency resource position of the synchronization signal block is a fourth offset; or a period of the common search space is the same as a revisit period of a synchronization signal block beam.

Optionally, the fourth offset is preset; or the fourth offset is carried in the synchronization signal block or the system message.

Optionally, the DCI is scrambled by using a radio network temporary identifier RNTI of the first terminal device group. Alternatively, the DCI is scrambled by using a cell radio network temporary identifier C-RNTI of the target terminal device. Alternatively, the DCI is scrambled by using a common RNTI.

Optionally, the DCI further includes a control field, and the control field indicates control information for resource scheduling.

Optionally, when a quantity of the at least one indication sequence is greater than one, the at least one indication sequence is mutually orthogonal.

In an implementation, the communication apparatus 800 may be applied to the terminal device in Embodiment 2 shown in FIG. 6. The processing unit 802 is configured to:
receive first information from a network device by using the communication unit 801, where the first information indicates a plurality of candidate beam sweeping patterns of a target beam of the network device; receive second information from the network device by using the communication unit 801, where the second information indicates a first beam sweeping pattern, and the first beam sweeping pattern is one of the plurality of candidate beam sweeping patterns; and transmit a signal based on the first beam sweeping pattern by using the communication unit 801.

Optionally, the processing unit 802 is further configured to:
receive a synchronization signal block from the network device by using the communication unit 801; and
determine a time-frequency resource position of the second information based on a time-frequency resource position of the synchronization signal block and a first offset. The first offset is an offset between the time-frequency resource position of the synchronization signal block and the time-frequency resource position of the second information.

Optionally, the first offset is preset; or the first offset is carried in the synchronization signal block or a system message.

Optionally, the target beam includes at least one of the following: a service beam, a synchronization signal block beam, and a random access channel occasion RO beam.

Optionally, the second information includes at least one piece of indication information. The at least one piece of indication information includes first indication information. The first indication information includes an index of the first beam sweeping pattern or a pattern indication sequence. The pattern indication sequence indicates a coverage order and/or a coverage time that are/is of the target beam for a plurality of beam positions and that are/is indicated by the first beam sweeping pattern. Alternatively, the first indication information indicates a first search space, and the first search space corresponds to the first beam sweeping pattern.

Optionally, the at least one piece of indication information further includes second indication information or third indication information. The second indication information indicates a second offset, and the second offset includes an offset between a start time of a beam sweeping period and a first reference time. The third indication information indicates a validity period of the first beam sweeping pattern, and the validity period is greater than or equal to the beam sweeping period.

Optionally, the first reference time is a time-domain resource start time of the synchronization signal block or a time-domain resource start time of the second information.

Optionally, the at least one piece of indication information further includes fourth indication information, and the fourth indication information indicates a duration of the beam sweeping period.

Optionally, a correspondence between the first search space and the first beam sweeping pattern is preset; or the correspondence between the first search space and the first beam sweeping pattern is carried in the synchronization signal block or the system message.

Optionally, the first indication information includes an index of the first search space.

Optionally, the first search space is a common search space or a dedicated search space.

Optionally, the second information further includes an indication of a first terminal device group. The indication of the first terminal device group identifies that the second information is configured for a terminal device in the first terminal device group, and the terminal device belongs to the first terminal device group. Alternatively, the second information further includes an identifier of the terminal device.

Optionally, the at least one piece of indication information is at least one indication sequence. Alternatively, the second information is carried in downlink control information DCI, and the at least one piece of indication information is at least one indication field in the DCI.

Optionally, the DCI is scrambled by using a radio network temporary identifier RNTI of the first terminal device group, and the terminal device belongs to the first terminal device group. Alternatively, the DCI is scrambled by using a cell radio network temporary identifier C-RNTI of the terminal device. Alternatively, the DCI is scrambled by using a common RNTI.

Optionally, the DCI further includes a control field, and the control field indicates control information for resource scheduling.

Optionally, when a quantity of the at least one indication sequence is greater than one, the at least one indication sequence is mutually orthogonal.

In an implementation, the communication apparatus 800 may be applied to the network device in Embodiment 2 shown in FIG. 6. The processing unit 802 is configured to:
send first information by using the communication unit 801, where the first information indicates a plurality of candidate beam sweeping patterns of a target beam of the network device;
send second information by using the communication unit 801, where the second information indicates a first beam sweeping pattern, and the first beam sweeping pattern is one of the plurality of candidate beam sweeping patterns; and
transmit a signal based on the first beam sweeping pattern by using the communication unit 801.

Optionally, the processing unit 802 is further configured to:
send a synchronization signal block by using the communication unit 801, where an offset between a time-frequency resource position of the synchronization signal block and a time-frequency resource position of the second information is a first offset.

Optionally, the first offset is preset; or the first offset is carried in the synchronization signal block or a system message.

Optionally, the target beam includes at least one of the following: a service beam, a synchronization signal block beam, and a random access channel occasion RO beam.

Optionally, the second information includes at least one piece of indication information. The at least one piece of indication information includes first indication information. The first indication information includes an index of the first beam sweeping pattern or a pattern indication sequence. The pattern indication sequence indicates a coverage order and/or a coverage time that are/is of the target beam for a plurality of beam positions and that are/is indicated by the first beam sweeping pattern. Alternatively, the first indication information indicates a first search space, and the first search space corresponds to the first beam sweeping pattern.

Optionally, the at least one piece of indication information further includes second indication information or third indication information. The second indication information indicates a second offset, and the second offset includes an offset between a start time of a beam sweeping period and a first reference time. The third indication information indicates a validity period of the first beam sweeping pattern, and the validity period is greater than or equal to the beam sweeping period.

Optionally, the first reference time is a time-domain resource start time of the synchronization signal block or a time-domain resource start time of the second information.

Optionally, the at least one piece of indication information further includes fourth indication information, and the fourth indication information indicates a duration of the beam sweeping period.

Optionally, a correspondence between the first search space and the first beam sweeping pattern is preset; or the correspondence between the first search space and the first beam sweeping pattern is carried in the synchronization signal block or the system message.

Optionally, the first indication information includes an index of the first search space.

Optionally, the first search space is a common search space or a dedicated search space.

Optionally, the second information further includes an indication of a first terminal device group. The indication of the first terminal device group identifies that the second information is configured for a terminal device in the first terminal device group. Alternatively, the second information further includes an identifier of a target terminal device.

Optionally, the at least one piece of indication information included in the second information is at least one indication sequence. Alternatively, the second information is carried in downlink control information DCI, and the at least one piece of indication information included in the second information is at least one indication field in the DCI.

Optionally, the DCI is scrambled by using a radio network temporary identifier RNTI of the first terminal device group. Alternatively, the DCI is scrambled by using a cell radio network temporary identifier C-RNTI of the target terminal device. Alternatively, the DCI is scrambled by using a common RNTI.

Optionally, the DCI further includes a control field, and the control field indicates control information for resource scheduling.

Optionally, when a quantity of the at least one indication sequence is greater than one, the at least one indication sequence is mutually orthogonal.

In an implementation, the communication apparatus 800 may be applied to the terminal device in Embodiment 3 shown in FIG. 7. The processing unit 802 is configured to:
receive indication information from a network device by using the communication unit 801, where the indication information indicates a first beam, and the first beam is a beam at one beam position in beams at a plurality of beam positions indicated by a first beam sweeping pattern;
determine a time-frequency resource position of the first beam based on a time-frequency resource position of the indication information and a first offset; and
transmit a signal based on the time-frequency resource position of the first beam.

Optionally, the first offset is preset; or the first offset is carried in the synchronization signal block or a system message.

Optionally, the indication information includes first information of the first beam, and the first information indicates a geographical coverage area of the first beam or an index of the first beam.

Optionally, the indication information further includes an indication of a first terminal device group. The indication of the first terminal device group identifies that the indication information is configured for a terminal device in the first terminal device group, and the terminal device belongs to the first terminal device group. Alternatively, the indication information further includes an identifier of the terminal device.

Optionally, the first information is an indication sequence. Alternatively, the indication information is carried in downlink control information DCI, and the first information is an indication field in the DCI.

Optionally, the DCI is scrambled by using a radio network temporary identifier RNTI of the first terminal device group, and the terminal device belongs to the first terminal device group. Alternatively, the DCI is scrambled by using a cell radio network temporary identifier C-RNTI of the terminal device. Alternatively, the DCI is scrambled by using a common RNTI.

Optionally, the DCI further includes a control field, and the control field indicates control information for resource scheduling.

Optionally, the processing unit 802 is further configured to:
receive configuration information from the network device by using the communication unit 801, where the configuration information indicates a first beam sweeping pattern.

In an implementation, the communication apparatus 800 may be applied to the network device in Embodiment 3 shown in FIG. 7. The processing unit 802 is configured to:
send indication information by using the communication unit 801, where the indication information indicates a first beam, and the first beam is a beam at one beam position in beams at a plurality of beam positions indicated by a first beam sweeping pattern; and
transmit a signal by using the communication unit 801 by using the first beam, where an offset between a time-frequency resource position of the first beam and a time-frequency resource position of the indication information is a first offset.

Optionally, the first offset is preset; or the first offset is carried in the synchronization signal block or a system message.

Optionally, the indication information includes first information of the first beam, and the first information indicates a geographical coverage area of the first beam or an index of the first beam.

Optionally, the indication information further includes an indication of a first terminal device group. The indication of the first terminal device group identifies that the indication information is configured for a terminal device in the first terminal device group.

Alternatively, the indication information further includes an identifier of a target terminal device.

Optionally, the first information is an indication sequence. Alternatively, the indication information is carried in downlink control information DCI, and the first information is an indication field in the DCI.

Optionally, the DCI is scrambled by using a radio network temporary identifier RNTI of the first terminal device group. Alternatively, the DCI is scrambled by using a cell radio network temporary identifier C-RNTI of the target terminal device. Alternatively, the DCI is scrambled by using a common RNTI.

Optionally, the DCI further includes a control field, and the control field indicates control information for resource scheduling.

Optionally, the processing unit 802 is further configured to:
send configuration information by using the communication unit 801, where the configuration information indicates a first beam sweeping pattern.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

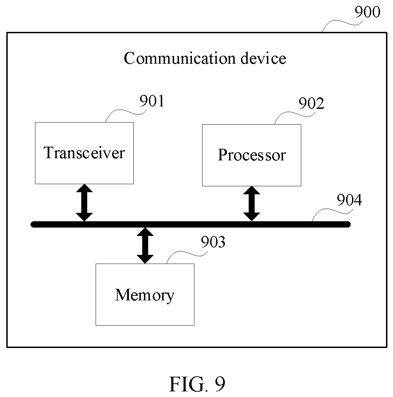

Based on the foregoing embodiments, an embodiment of this application further provides a communication device. The communication device may be the terminal device or the network device in the communication systems shown in FIG. 2A to FIG. 2D. The communication device may implement the methods in the foregoing embodiments, and has a function of the communication apparatus 800. Refer to FIG. 9. A communication device 900 includes a transceiver 901, a processor 902, and a memory 903. The transceiver 901, the processor 902, and the memory 903 are connected to each other.

Optionally, the transceiver 901, the processor 902, and the memory 903 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

The transceiver 901 is configured to receive and send a signal, to implement communication with another device.

For a function of the processor 902, refer to the descriptions in the foregoing embodiments. Details are not described herein again.

The processor 902 may be a central processing unit (central processing unit, CPU), a network processor (network processor, NP), a combination of a CPU and an NP, or the like. The processor 902 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. The processor 902 may implement the foregoing functions by hardware or certainly by hardware executing corresponding software. The steps in the methods disclosed with reference to embodiments of this application may be directly performed and completed by the processor 902, or may be performed and completed by a combination of hardware and software modules in the processor 902.

The memory 903 is configured to store program instructions, data, and the like. Specifically, the program instructions may include program code. The program code includes computer operation instructions. The memory 903 may include a volatile memory (volatile memory), for example, a random access memory (random access memory, RAM), or may further include a non-volatile memory (non-volatile memory), for example, at least one magnetic disk memory, a hard disk drive (hard disk drive, HDD), or a solid-state drive (solid-state drive, SSD). Alternatively, the memory 903 may be any other medium that can be configured to carry or store program code in a form of instructions or a data structure and that can be accessed by a computer. This is not limited in this application. The processor 902 executes the program instructions stored in the memory 903, to implement the foregoing functions, thereby implementing the methods provided in the foregoing embodiments.

Based on the foregoing embodiments, an embodiment of this application further provides a communication system. The communication system includes a terminal device and a network device. The terminal device is configured to implement the steps performed by the terminal device in the methods provided in the foregoing embodiments, and the network device is configured to implement the steps performed by the network device in the methods provided in the foregoing embodiments.

Based on the foregoing embodiments, an embodiment of this application further provides a computer program product. The computer program product includes a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

Optionally, the computer may include but is not limited to a communication device such as a terminal device or a network device.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of instructions or a data structure and that can be accessed by a computer.

Based on the foregoing embodiments, an embodiment of this application further provides a chip. The chip is configured to read a computer program stored in a memory, to implement the methods provided in the foregoing embodiments. Optionally, the chip may include a processor. The processor is coupled to the memory, and is configured to read the computer program stored in the memory, to implement the methods provided in the foregoing embodiments. Optionally, the chip may further include components such as a memory, a communication interface, and a power supply module. The memory is configured to store a computer program; the communication interface is configured to receive and send data; and the power supply module is configured to supply power to the processor.

Based on the foregoing embodiments, an embodiment of this application provides a chip system. The chip system includes a processor, configured to support a computer apparatus in implementing functions related to the terminal device in the foregoing embodiments. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. In this way, if these modifications and variations to this application fall within the scope of the claims of this application and equivalent technologies thereof, this application is also intended to include these modifications and variations.

## Claims

1. A communication method, applied to a terminal device and comprising:
receiving beam indication information from a network device, wherein the beam indication information indicates coverage information of a target beam of the network device, and the coverage information of the target beam comprises at least one of the following: a coverage time of the target beam, a frequency-domain resource of the target beam, or a geographical coverage area of the target beam; and
transmitting a signal based on the coverage information of the target beam of the network device.

2. The method according to claim 1, wherein the method further comprises:
receiving a synchronization signal block from the network device; and
determining a time-frequency resource position of the beam indication information based on a time-frequency resource position of the synchronization signal block and a first offset, wherein the first offset is an offset between the time-frequency resource position of the synchronization signal block and the time-frequency resource position of the beam indication information.

3. The method according to claim 1 or 2, wherein when the coverage information of the target beam comprises the coverage time of the target beam, the method further comprises:
entering a low-power state before the coverage time of the target beam begins.

4. A communication method, applied to a network device and comprising:
determining beam indication information; and
sending the beam indication information, wherein the beam indication information indicates coverage information of a target beam of the network device, and the coverage information of the target beam comprises at least one of the following: a coverage time of the target beam, a frequency-domain resource of the target beam, or a geographical coverage area of the target beam.

5. The method according to claim 4, wherein the method further comprises:
sending a synchronization signal block, wherein an offset between a time-frequency resource position of the synchronization signal block and a time-frequency resource position of the beam indication information is a first offset.

6. The method according to claim 2 or 5, wherein the first offset is preset; or the first offset is carried in the synchronization signal block or a system message.

7. The method according to any one of claims 1 to 6, wherein the beam indication information comprises at least one piece of indication information; and
when the coverage information of the target beam comprises the coverage time of the target beam, the at least one piece of indication information comprises first indication information, the first indication information indicates a second offset, and the second offset comprises an offset between a coverage start time of the target beam and a first reference time; or
when the coverage information of the target beam comprises the frequency-domain resource of the target beam, the at least one piece of indication information comprises second indication information, the second indication information indicates a third offset, and the third offset comprises an offset between a start position of the frequency-domain resource of the target beam and a start position of a first reference frequency-domain resource; or
when the coverage information of the target beam comprises the geographical coverage area of the target beam, the at least one piece of indication information comprises third indication information, and the third indication information indicates the geographical coverage area.

8. The method according to claim 7, wherein the first reference time is a time-domain resource start time of the synchronization signal block or a time-domain resource start time of the beam indication information; and
the first reference frequency-domain resource is a frequency-domain resource of the synchronization signal block or a frequency-domain resource of the beam indication information.

9. The method according to claim 7 or 8, wherein when the coverage information of the target beam comprises the coverage time of the target beam, the at least one piece of indication information further comprises fourth indication information, and the fourth indication information indicates a coverage duration of the target beam; or
when the coverage information of the target beam comprises the frequency-domain resource of the target beam, the at least one piece of indication information further comprises fifth indication information, and the fifth indication information indicates a width of the frequency-domain resource of the target beam.

10. The method according to any one of claims 7 to 9, wherein the beam indication information further comprises an indication of a first terminal device group, and the indication of the first terminal device group identifies that the beam indication information is configured for a terminal device in the first terminal device group; or
the beam indication information further comprises an identifier of a target terminal device.

11. The method according to any one of claims 7 to 10, wherein the at least one piece of indication information is at least one indication sequence; or
the beam indication information is carried in downlink control information DCI, and the at least one piece of indication information is at least one indication field in the DCI.

12. The method according to claim 11, wherein a time-frequency resource position of the DCI is located in a common search space.

13. The method according to claim 12, wherein an offset between a time-frequency resource position of the common search space and the time-frequency resource position of the synchronization signal block is a fourth offset; or a period of the common search space is the same as a revisit period of a synchronization signal block beam.

14. The method according to claim 13, wherein the fourth offset is preset; or the fourth offset is carried in the synchronization signal block or the system message.

15. The method according to any one of claims 11 to 14, wherein
the DCI is scrambled by using a radio network temporary identifier RNTI of the first terminal device group; or
the DCI is scrambled by using a cell radio network temporary identifier C-RNTI of the target terminal device.

16. The method according to claim 11, wherein when a quantity of the at least one indication sequence is greater than one, the at least one indication sequence is mutually orthogonal.

17. A communication method, applied to a terminal device and comprising:
receiving first information from a network device, wherein the first information indicates a plurality of candidate beam sweeping patterns of a target beam of the network device;
receiving second information from the network device, wherein the second information indicates a first beam sweeping pattern, and the first beam sweeping pattern is one of the plurality of candidate beam sweeping patterns; and
transmitting a signal based on the first beam sweeping pattern.

18. The method according to claim 17, wherein the method further comprises:
receiving a synchronization signal block from the network device; and
determining a time-frequency resource position of the second information based on a time-frequency resource position of the synchronization signal block and a first offset, wherein the first offset is an offset between the time-frequency resource position of the synchronization signal block and the time-frequency resource position of the second information.

19. A communication method, applied to a network device and comprising:
sending first information, wherein the first information indicates a plurality of candidate beam sweeping patterns of a target beam of the network device;
sending second information, wherein the second information indicates a first beam sweeping pattern, and the first beam sweeping pattern is one of the plurality of candidate beam sweeping patterns; and
transmitting a signal based on the first beam sweeping pattern.

20. The method according to claim 19, wherein the method further comprises:
sending a synchronization signal block, wherein an offset between a time-frequency resource position of the synchronization signal block and a time-frequency resource position of the second information is a first offset.

21. The method according to claim 18 or 20, wherein the first offset is preset; or the first offset is carried in the synchronization signal block or a system message.

22. The method according to any one of claims 17 to 21, wherein the second information comprises at least one piece of indication information;
the at least one piece of indication information comprises first indication information; and
the first indication information comprises an index of the first beam sweeping pattern or a pattern indication sequence, wherein the pattern indication sequence indicates a coverage order and/or a coverage time that are/is of the target beam for a plurality of beam positions and that are/is indicated by the first beam sweeping pattern; or
the first indication information indicates a first search space, and the first search space corresponds to the first beam sweeping pattern.

23. The method according to claim 22, wherein the at least one piece of indication information further comprises second indication information or third indication information;
the second indication information indicates a second offset, and the second offset comprises an offset between a start time of a beam sweeping period and a first reference time; and
the third indication information indicates a validity period of the first beam sweeping pattern, and the validity period is greater than or equal to the beam sweeping period.

24. The method according to claim 23, wherein the first reference time is a time-domain resource start time of the synchronization signal block or a time-domain resource start time of the second information.

25. The method according to claim 23 or 24, wherein the at least one piece of indication information further comprises fourth indication information, and the fourth indication information indicates a duration of the beam sweeping period.

26. The method according to claim 22, wherein a correspondence between the first search space and the first beam sweeping pattern is preset; or the correspondence between the first search space and the first beam sweeping pattern is carried in the synchronization signal block or the system message.

27. The method according to any one of claims 22 to 26, wherein the second information further comprises an indication of a first terminal device group, and the indication of the first terminal device group identifies that the second information is configured for a terminal device in the first terminal device group; or
the second information further comprises an identifier of a target terminal device.

28. The method according to any one of claims 22 to 27, wherein the at least one piece of indication information is at least one indication sequence; or
the second information is carried in downlink control information DCI, and the at least one piece of indication information is at least one indication field in the DCI.

29. The method according to claim 28, wherein
the DCI is scrambled by using a radio network temporary identifier RNTI of the first terminal device group; or
the DCI is scrambled by using a cell radio network temporary identifier C-RNTI of the target terminal device.

30. The method according to claim 29, wherein when a quantity of the at least one indication sequence is greater than one, the at least one indication sequence is mutually orthogonal.

31. A communication method, applied to a terminal device and comprising:
receiving indication information from a network device, wherein the indication information indicates a first beam, and the first beam is a beam at one beam position in beams at a plurality of beam positions indicated by a first beam sweeping pattern;
determining a time-frequency resource position of the first beam based on a time-frequency resource position of the indication information and a first offset; and
transmitting a signal based on the time-frequency resource position of the first beam.

32. A communication method, applied to a network device and comprising:
sending indication information, wherein the indication information indicates a first beam, and the first beam is a beam at one beam position in beams at a plurality of beam positions indicated by a first beam sweeping pattern; and
transmitting a signal by using the first beam, wherein an offset between a time-frequency resource position of the first beam and a time-frequency resource position of the indication information is a first offset.

33. The method according to claim 31 or 32, wherein the first offset is preset; or the first offset is carried in a synchronization signal block or a system message.

34. The method according to any one of claims 31 to 33, wherein the indication information comprises first information of the first beam, and the first information indicates a geographical coverage area of the first beam or an index of the first beam.

35. The method according to claim 34, wherein the indication information further comprises an indication of a first terminal device group, and the indication of the first terminal device group identifies that the indication information is configured for a terminal device in the first terminal device group; or
the indication information further comprises an identifier of a target terminal device.

36. A communication apparatus, comprising:
a communication unit, configured to receive and send data; and
a processing unit, configured to perform the method according to any one of claims 1 to 35.

37. A communication device, comprising:
a transceiver, configured to receive and send a signal; and
a processor, configured to execute program instructions, so that the communication device performs the method according to any one of claims 1 to 35.

38. A communication system, comprising:
a terminal device configured to perform any one of claims 1 to 3 or 6 to 16, and a network device configured to perform any one of claims 4 to 16; or
a terminal device configured to perform any one of claims 17, 18, or 21 to 30, and a network device configured to perform any one of claims 19 to 30; or
a terminal device configured to perform any one of claims 31 or 33 to 35, and a network device configured to perform any one of claims 32 to 35.

39. A computer-readable storage medium, wherein the computer-readable storage medium stores a computer program, and when the computer program is run on a computer, the computer is enabled to perform the method according to any one of claims 1 to 35.

40. A chip, wherein the chip comprises a processor, the processor is coupled to a memory, and the processor is configured to read a computer program stored in the memory, so that the chip performs the method according to any one of claims 1 to 35.

41. A communication device, comprising at least one processing element and at least one storage element, wherein
the at least one storage element is configured to store a computer program; and
the at least one processing element is configured to read a computer program in the at least one storage element, to perform the method according to any one of claims 1 to 35.

42. A computer program product, wherein when the computer program product is run on a computer, the computer is enabled to perform the method according to any one of claims 1 to 35.

43. A chip system, wherein the chip system comprises a processor and a memory, the memory is configured to store a computer program, and the processor is coupled to the processor and is configured to read the computer program stored in the memory, to perform the method according to any one of claims 1 to 35.
